# EUROPEAN PATENT SPECIFICATION

(11) **EP 3 796 526 B1**
(45) Date of publication and mention of the grant of the patent: **06.08.2025**
(21) Application number: 19804242.6
(22) Date of filing: 08.05.2019
(51) Int. Cl.: H02K 5/08, H02K 3/38, H02K 5/136

(54) **MOLDED MOTOR**
GEFORMTER MOTOR
MOTEUR MOULÉ

(30) Priority: 17.05.2018 JP 2018095231
(43) Date of publication of application: 24.03.2021
(73) Proprietor: Panasonic Intellectual Property Management Co., Ltd., Osaka-shi, Osaka 540-6207 (JP)
(72) Inventor: NANBU, Yasuo, Osaka-shi, Osaka 540-6207 (JP); SAITO, Koichi, Osaka-shi, Osaka 540-6207 (JP)
(74) Representative: SSM Sandmair
(86) International application number: PCT/JP2019/018312
(87) International publication number: WO 2019/220956

(56) References cited:
- GB-A- 1 450 501
- JP-A- 2009 213 275
- JP-A- H05 300 699
- JP-A- H09 261 935
- JP-U- S56 171 555

## Description

### TECHNICAL FIELD

The present invention relates to a molded motor which covers a stator with mold resin.

### BACKGROUND ART

A molded motor is known as a motor which has a structure of a stator covered with mold resin to reduce noise and vibration of the motor. With a recent increase in motor output or the like, this type of molded motor generates a larger amount of heat from coils wound around a stator core. Accordingly, a problem of thermal deterioration of the mold resin has been arising.

For preventing this thermal deterioration of the mold resin, PTL 1 discloses a use of an epoxy resin which contains a filler having high thermal conductivity as the mold resin. The use of this resin increases heat dissipation from the mold resin, thereby preventing thermal deterioration.

Additionally, a technique which improves electrical insulation of a molded motor has been proposed. For example, PTL 2 discloses a motor which increase dielectric strength by reducing generation of voids (cavities) generated in the case of molding with resin and affecting electrical insulation. Furthermore, PTL 3 discloses a motor stator configured to satisfy sufficient dielectric voltage for a thickness of insulating resin surrounding a periphery of a motor. However, if excessive currents flow in coils wound around a stator core for some reasons and increase temperatures of the coils with generation of heat from the coils, an insulator that insulates outer circumferential surfaces of coil conductors may melt and cause short-circuiting between the coil conductors. If the conductors are short-circuited and generate sparks, the sparks may ignite gas generated from insulating resin or the like provided between the coils and the stator core and heated. Furthermore, if the mold resin is thermally deteriorated and forms cracks or the like by generation of heat from the coils, generated sparks may leak from a cracked portion of the mold resin to the outside of the motor.

In addition, according to the method which achieves improvement to secure electrical insulation by a structural change for a space not filled with resin or generated voids as in PTL 2 or PTL 3, this change may affect strength or electrical characteristics, and deteriorate the strength or the electrical characteristics even if electrical insulation is secured. Furthermore, PTL 2 or PTL 3 which adopts the method of controlling a flow of resin or air during injection of injection molding by a structural change also causes a problem that this method is difficult to introduce with ease in view of an effect of the change on a manufacturing step as well.

### Citation List

### Patent Literature

PTL 1: Unexamined Japanese Patent Publication No. 2004-143368
PTL 2: Unexamined Japanese Patent Publication No. 2005-176482
PTL 3: Unexamined Japanese Patent Publication No. 2005-143206

Document GB 1 450 501 A discloses a dynamo-electric machine comprising an assembly of a wound stator, a housing part constituting an end shield having a circular trough which accommodates the end turns of the winding, spacer means, e.g. perforated foil, between the end turns and the housing part and a cylindrical member within and coaxial with the stator, introducing a settable material into the assembly which acts as a mould and removing the cylindrical member after the material has set.

Document JP 2009 213275 A discloses a motor which eliminates the use of a complicated metal mold, and improves design freedom.

### SUMMARY OF THE INVENTION

The present invention has been developed in consideration of the aforementioned problems. A main object of the present invention is to provide a molded motor capable of reducing an increase in a size of a motor external shape while securing electrical insulation, and capable of preventing leakage of fire to the outside of the motor even if excessive currents flow in coils wound around a stator core.

For achieving the above object, a molded motor of the present inventionhas the features of claim 1.

Provided according to the present invention is a molded motor capable of reducing an increase in a size of a motor external shape while securing electrical insulation, and capable of preventing leakage of fire to the outside of the motor even if excessive currents flow in coils wound around a stator core.

### BRIEF DESCRIPTION OF DRAWINGS

FIG. 1 is an exploded perspective view of a motor according to an exemplary embodiment of the present invention.
FIG. 2 is a half cross-sectional view of the motor according to the exemplary embodiment of the present invention.
FIG. 3 is a cross-sectional plan view as viewed from arrow 3-3 of FIG. 2.
FIG. 4 is an exploded perspective view of a different motor according to the exemplary embodiment of the present invention.
FIG. 5A is a cross-sectional view showing a main part of a positional relationship between a coil assembly, a metal outer cover, and an insulating film of the motor according to the exemplary embodiment of the present invention.
FIG. 5B is a cross-sectional view showing a main part of a molded motor as a comparative example for comparison with the motor shown in FIG. 5A.
FIG. 6 is an exploded perspective view showing the coil assembly, the metal outer cover, and the insulating film of the motor according to the exemplary embodiment of the present invention.
FIG. 7 is a half cross-sectional view of the motor according to a non-claimed example.
FIG. 8 is a cross-sectional plan view as viewed from arrow 8-8 of FIG. 7.
FIG. 9 is a cross-sectional view showing a positional relationship between a coil assembly, a metal inner cover, a metal outer cover, and an insulating film of the motor according to the non-claimed example.
FIG. 10 is an exploded perspective view showing a stator, an insulating film, and a metal outer cover of a motor in non-claimed Modification 1.
FIG. 11 is an exploded perspective view showing a stator, an insulating film, and a metal outer cover of a motor in non-claimed Modification 2.
FIG. 12 is an exploded perspective view showing a stator, an insulating film, and a metal outer cover of a motor according to non-claimed Modification 3.
FIG. 13 is an exploded perspective view showing a stator, an insulating film, and a metal outer cover of a different motor in non-claimed Modification 3.
FIG. 14 is an exploded perspective view showing a stator, an insulating film, and a metal outer cover of a motor in non-claimed Modification 4.
FIG. 15 is an exploded perspective view showing a stator, an insulating film, and a metal outer cover of a motor in non-claimed Modification 5.
FIG. 16 is a half cross-sectional view of a motor according to non-claimed Modification 6.
FIG. 17 is a cross-sectional view showing a main part of a positional relationship between a coil assembly, a metal outer cover, and an insulating film of the motor in non-claimed Modification 6.
FIG. 18 is a half cross-sectional view showing a motor as a comparative example for comparison with the motor shown in FIG. 16.
FIG. 19 is an enlarged view of a main part of the motor shown in FIG. 17.
FIG. 20 is an enlarged view of a main part of a motor as a comparative example for comparison with the motor shown in FIG. 19.
FIG. 21 is a cross-sectional view showing a main part of a different positional relationship between the coil assembly, the metal outer cover, and the insulating film of the motor in non-claimed Modification 6.

### DESCRIPTION OF EMBODIMENTS AND NON-CLAIMED EXAMPLES

Before describing an exemplary embodiment of the present invention, circumstances that have led to development of the present invention are described.

The inventors of the present application focused on coil ends axially protruding from a stator core to take a measure (non-combustion measure) for preventing leakage of fire to the outside of a motor as a result of a flow of excessive currents in coils wound around the stator core.

Specifically, the coils wound around the stator core are surrounded by the stator core except for the coil ends axially protruding from the stator core. Accordingly, there is substantially no possibility of leakage of ignited fire to the outside of the motor. On the other hand, the coil ends protrude from the stator core, and therefore are in contact with mold resin. Accordingly, if cracks or the like are produced near the mold resin in contact with the coil ends, the ignited fire may leak from a cracked portion of the mold resin to the outside of the motor.

Concerning this point, the inventors of the present application have noticed, as a non-combustion measure, that fire leaked from the cracked portion of the mold resin can be cut off by a metal member provided on an outer surface of the mold resin at a portion facing the coil ends.

Meanwhile, when the metal member is provided on the outer surface of the mold resin, a maximum withstanding voltage between the metal member and the coils, i.e., a dielectric voltage, needs to be considered. The dielectric voltage is specified by Electrical Appliance and Material Safety Act. On the other hand, miniaturization of a molded motor of the type described in the present invention is achievable by reducing a thickness of the mold resin, for example. In this case, a sufficient dielectric voltage as described above needs to be secured.

In particular, examples of a method generally adopted for forming the molded motor include a method which fixes a stator and the like inside a mold, and filling melted mold resin in the mold for molding. In this case, bubbles may be generated when the melted mold resin is poured into the mold. These bubbles may remain in a completed solid mold resin as minute spaces called voids. It is known that voids or spaces in which the resin is not sufficiently filled act to lower a dielectric breakdown voltage, and affect electrical insulation.

The present invention has been developed based on the above findings, and provides a molded motor capable of reducing an increase in a size of a motor external shape while securing electrical insulation, and capable of preventing leakage of fire to the outside of the motor even if excessive currents flow in coils wound around a stator core.

An exemplary embodiment of the present invention, a non-claimed example and non-claimed modifications are hereinafter described with reference to the drawings. Note that the exemplary embodiment described below shows one specific example of the present invention. Therefore, numerical values, shapes, materials, constituent elements, arrangement positions of constituent elements, connection forms, and the like shown in the following exemplary embodiment are examples and are not intended to limit the present invention. Therefore, constituent elements included in the following exemplary embodiment and not recited in the independent claim that indicates a most generic concept of the present invention are described as optional constituent elements.

Note that each of the drawings is a schematic view, and does not necessarily show a strict illustration. Furthermore, in each of the drawings, substantially identical configurations are given identical reference numerals, and the same description is omitted or simplified.

### (Exemplary embodiment)

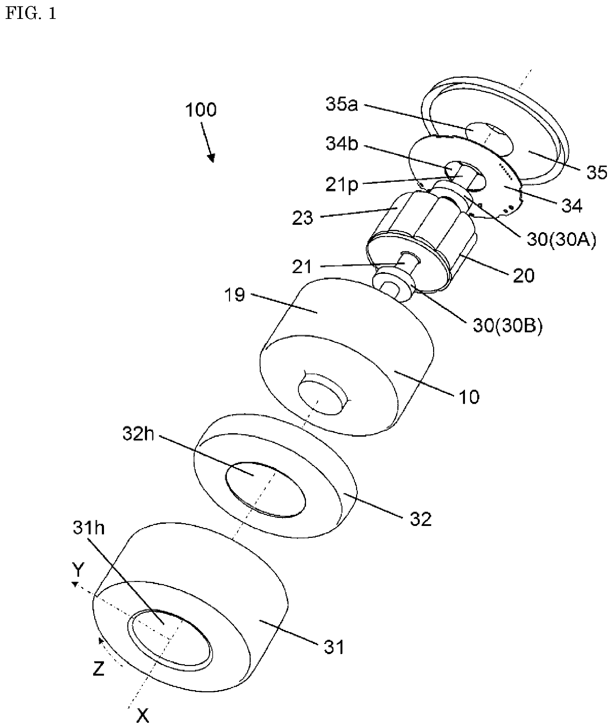

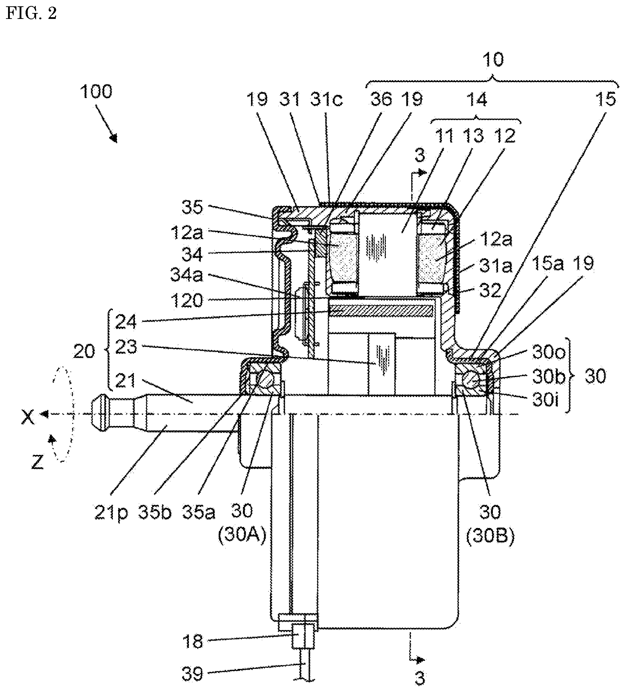

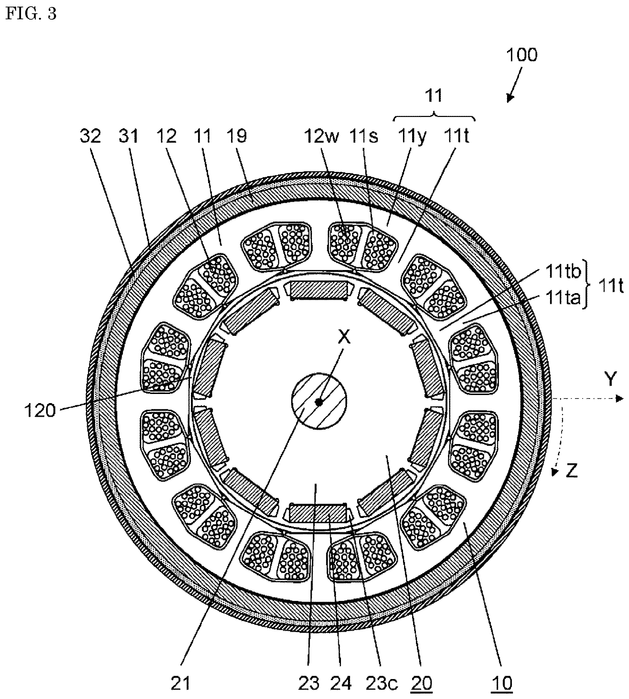

FIG. 1 is an exploded perspective view of motor (hereinafter also referred to as molded motor where appropriate) 100 according to an exemplary embodiment of the present invention. FIG. 2 is a half cross-sectional view of motor 100. FIG. 3 is a cross-sectional plan view as viewed from arrow 3-3 of FIG. 2.

As shown in FIGS. 1 to 3, motor 100 includes rotor 20, stator 10, bearings 30, mold resin portion 19, metal outer cover 31 as a metal member, and insulating film 32 as an insulating material.

Rotor 20 includes rotary shaft 21 extending in axial direction X, and rotor core 23. Rotor core 23 holds permanent magnets (hereinafter also referred to as magnets where appropriate) 24, and is fixed to rotary shaft 21.

Stator 10 includes stator core 11 where a plurality of members each constituting tooth (also referred to as teeth to indicate a plurality of members each constituted by tooth) 11t as salient poles are arranged in circumferential direction Z, and a plurality of coils 12 each wound via insulators 13 around corresponding tooth 11t as a salient pole of stator core 11. Stator 10 faces rotor 20.

Bearings 30 support rotor 20 such that rotor 20 is freely rotatable. Motor 100 adopts a pair of bearings 30. Note that similar effects can be produced if a cantilever bearing is employed.

Mold resin portion 19 covers stator 10 with mold resin.

Metal outer cover 31 as a metal member is mounted on an outer surface of mold resin portion 19. Metal outer cover 31 includes cylindrical portion 31c having a cylindrical shape, and bottom surface portion 31a forming a bottom surface of cylindrical portion 31c.

Insulating film 32 as an insulating material is located between mold resin portion 19 and metal outer cover 31 as a metal member. At least a part of a surface of insulating film 32 is arranged at a portion facing the plurality of coils 12 arranged in circumferential direction Z.

In particular, a following configuration produces remarkable operations and effects.

According to motor 100 of the present exemplary embodiment, each of the plurality of coils 12 includes coil ends 12a protruding from stator core 11 toward both sides in axial direction X. Cylindrical portion 31c included in metal outer cover 31 as a metal member is located on an outer circumferential surface of mold resin portion 19 at least at a portion facing coil ends 12a on both sides.

Insulating film 32 as an insulating material has a cup shape which has a hole in a bottom surface portion of insulating film 32. Insulating film 32 is interposed between an inner surface of metal outer cover 31 and an outer surface of mold resin portion 19.

Further details are described with reference to the drawings.

As shown in FIG. 1, motor 100 has rotor 20 including permanent magnets. Motor 100 is a brushless motor which covers a coil assembly of stator 10 with mold resin. According to the present exemplary embodiment, motor 100 is described as an example of the brushless motor. As shown in FIG. 2, a direction indicated by X where rotary shaft 21 extends is defined as an axial direction. In the following description, it is assumed that a Y direction extending from center X of rotary shaft 21 is a radial direction, and that a Z direction surrounding center X is a circumferential direction in a plane orthogonal to axial direction X as shown in FIG. 3.

According to the present exemplary embodiment, a metal member as a non-combustion measure is provided for the mold resin to prevent leakage of fire or smoke from a main body of motor 100 to the outside as a result of a problem such as an excessive current flow in the coils. Specifically, metal outer cover 31 made of metal is provided as the metal member. Metal outer cover 31 has a cup shape.

According to motor 100, as shown in FIG. 1 and FIG. 2, insulating film 32 as an insulating material is interposed between the outer surface of mold resin portion 19 and the inner surface of metal outer cover 31 to secure a dielectric voltage between coils 12 and metal outer cover 31.

An overall configuration of motor 100 is described. As shown in FIG. 1, motor 100 includes stator 10 covered with mold resin portion 19 as a mold resin, rotor 20, bearings 30A, 30B as a pair of bearings 30, metal outer cover 31 as a metal member, and insulating film 32 as an insulating material. Motor 100 further includes circuit board 34 and first bracket 35.

As shown in FIG. 2, stator 10 includes coil assembly 14 which includes stator core 11, coils 12, and insulators 13. Coil assembly 14 is assembled by winding each of coils 12 around a corresponding salient pole of stator core 11 via insulators 13 made of an insulating material.

Stator core 11 is constituted by a plurality of thin iron plates laminated in axial direction X, for example. As shown in FIG. 3, stator core 11 has ringshaped yoke 11y, and a plurality of teeth 11t as salient poles extending inward in radial direction Y from an inner circumferential surface of yoke 11y. The plurality of teeth 11t are arranged at equal intervals in circumferential direction Z while forming slots 11s as openings between respective teeth 11t. The present exemplary embodiment shows an example where 12 slots are formed by the plurality of teeth 11t. In the following description, terms "teeth" (plural form of tooth) and "tooth" are used differently for each case. Specifically, a plurality of salient poles protruding toward a center of stator core 11 are referred to as teeth, while one salient pole of the plurality of salient poles is referred to as a tooth.

Tooth tip end portion 11tb formed at an extended tip end portion of each tooth 11t extends in circumferential direction Z to become wider than extended tooth middle portion 11ta. An inner circumferential surface of tooth tip end portion 11tb constitutes a magnetic pole surface facing an outer circumferential surface of rotor 20. Each of coils 12 is formed by winding wire 12w around corresponding tooth 11t of stator core 11 thus configured while allowing winding wire 12w to pass through an opening space of slot 11s. Coils 12 are connected to each other by crossover wires for connecting respective coils 12. Moreover, a wire terminal of predetermined coil 12 is connected to pins (not shown) attached to insulators 13. Each of the pins herein is a metal electrical connection member for an electrical connection terminal. Each tip of the pins protrudes from a terminal cap as a driving terminal. For example, coil 12 for each tooth 11t is energized and driven by three-phase alternating current, that is, a U-phase, a V-phase, and a W-phase electrically different from each other in phase by 120 degrees.

Furthermore, as shown in FIG. 2, stator 10 includes second bracket 15 arranged so as to protrude from the main body of stator 10. Coil assembly 14, second bracket 15, and terminal cap 36 are arranged at predetermined positions of stator 10. These members except for an exposed portion are covered with a resin material to be integrally molded with mold resin. The resin material herein is not particularly limited. For example, an epoxy resin, a polyester resin, or the like having excellent thermal conductivity is adoptable.

Stator 10 including mold resin portion 19 which integrates the foregoing members with the mold resin is configured in this manner. Stator 10 configured as above has a substantially cylindrical shape. A wiring hole through which wiring holder 18 is mounted, and others are also formed in a cylindrical surface of stator 10. An inner circumferential surface of each tooth 11t and a terminal surface of terminal cap 36 are exposed as the exposed portion from mold resin portion 19. Furthermore, one of both circular surfaces of stator 10 is open, and first bracket 35 is mounted to cover this opening. The other surface is closed. As described above, second bracket 15 is so arranged as to protrude. A configuration of stator 10 is described in detail below.

As shown in FIGS. 1 to 3, rotor 20 is inserted inside stator 10 with a predetermined clearance left from stator 10 in radial direction Y. That is, motor 100 is an inner rotor type motor which includes rotor 20 arranged inside stator 10. According to motor 100, the inner circumferential surface of stator 10 and the outer circumferential surface of rotor 20 face each other in radial direction Y with gap 120 as a short clearance left therebetween. Motor 100 of an inner rotor type is hereinafter described by way of example.

Rotor 20 includes rotor core 23 which holds permanent magnets 24 around rotary shaft 21 rotatably held by the pair of bearings 30. The pair of bearings 30 herein are ball bearings each of which has a plurality of balls 30b each having a small diameter as shown in FIG. 2. Specifically, each of bearings 30 is configured such that balls 30b are inserted between outer ring 30o having an annular shape and inner ring 30i having an annular shape and smaller than outer ring 30o. Outer ring 30o of one bearing 30A of the pair of bearings 30 is fixed by first bracket 35, while outer ring 30o of other bearing 30B is fixed by second bracket 15. In addition, rotary shaft 21 is fixed to inner ring 30i of each of bearings 30A, 30B.

Rotor core 23 is constituted by a plurality of thin iron plates laminated in axial direction X, for example, and is fixed to rotary shaft 21. Magnets 24 are permanent magnets, and are arranged inside rotor core 23.

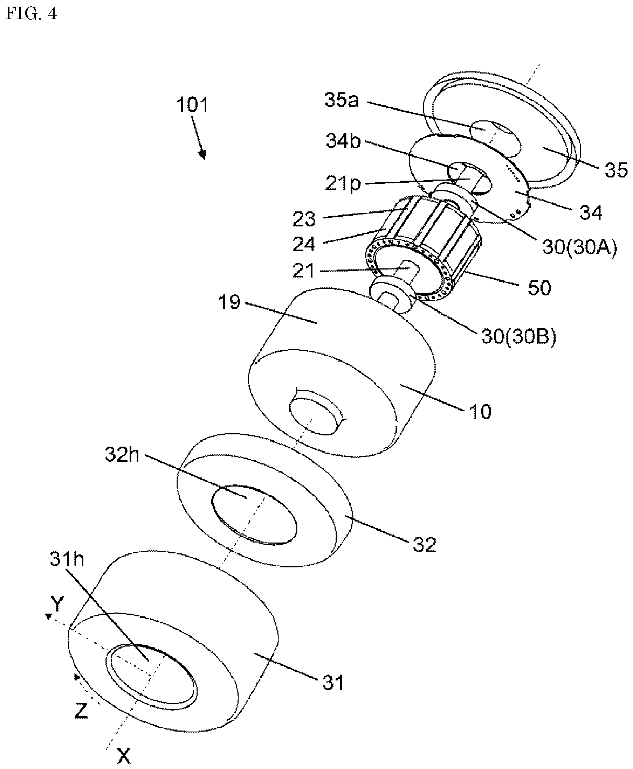

As shown in FIG. 3, a plurality of magnet insertion holes 23c penetrating in axial direction X are formed in rotor core 23 at equal intervals in circumferential direction Z. Magnets 24 are inserted into magnet insertion holes 23c one for each. The present exemplary embodiment shows motor 100 of an interior permanent magnet (IPM) type which includes magnets 24 contained inside rotor core 23. In addition, shown is an example where ten magnets 24 are arranged with S poles and N poles of magnetic poles of magnets 24 alternately disposed in circumferential direction Z to constitute ten magnetic poles. Accordingly, presented in the present exemplary embodiment is an example of motor 100 which is a brushless motor having 10 poles and 12 slots. While motor 100 of the inner rotor type is presented by way of example in the present exemplary embodiment, the motor may be motor 101 of a surface permanent magnet motor type (SPM type) which includes rotor 50 retaining magnets 24 on an outer circumferential surface of rotor core 23 as shown in FIG. 4. FIG. 4 is an exploded perspective view of a different motor according to the exemplary embodiment of the present invention.

As described above, rotor 20 is constituted by rotor core 23 having a cylindrical shape as shown in FIG. 1, a plurality of magnets 24 held inside rotor core 23, and rotary shaft 21 penetrating a center of rotor core 23.

Rotary shaft 21 is rotatably supported by bearings 30A, 30B. Bearings 30A, 30B are fixed via first bracket 35 and second bracket 15 which are made of metal and arranged on one and the other sides of stator 10 in axial direction X, respectively.

As shown in FIGS. 1 and 2, first bracket 35 has a substantially disc shape, and is configured to be mounted on the opening side of stator 10. Furthermore, holding portion 35a recessed in a cylindrical shape is formed in a central portion of first bracket 35. Bearing 30A is held on holding portion 35a. Accordingly, one side of rotary shaft 21 is rotatably supported on stator 10 by mounting first bracket 35 with bearing 30A inserted into holding portion 35a. Furthermore, as shown in FIG. 2, opening 35b is formed at a center of holding portion 35a. Rotary shaft 21 penetrates opening 35b and protrudes outward. A protruding portion of rotary shaft 21 constitutes output shaft 21p to which a load or the like is connected. In the following description, a side where output shaft 21p is arranged is referred to as an output shaft side, and a side opposite to this side is referred to as a side opposite to the output shaft in axial direction X.

Second bracket 15 has a smaller diameter than a diameter of first bracket 35, and has a shape formed by combining a disc and a cylinder. Second bracket 15 is fixed to mold resin portion 19 of stator 10 by molding described above. Holding portion 15a recessed in a cylindrical shape is similarly formed in a central portion of second bracket 15. Bearing 30B is held on holding portion 15a. Accordingly, the other side of rotary shaft 21 is rotatably supported on stator 10 by inserting bearing 30B into holding portion 15a.

In addition, metal outer cover 31 made of metal is mounted on the side where second bracket 15 of stator 10 is disposed, that is, the side opposite to the output shaft, with insulating film 32 interposed. As shown in FIG. 1, metal outer cover 31 has a hollow cup shape having opening 31h at a center of metal outer cover 31. In the example presented herein, insulating film 32 similarly has a hollow cup shape having opening 32h at a center of insulating film 32, and has a shorter length in axial direction X than a length of metal outer cover 31. Metal outer cover 31 is mounted on stator 10 in such a manner that second bracket 15 included in stator 10 penetrates opening 31h of metal outer cover 31 and opening 32h of insulating film 32. Detailed configurations of metal outer cover 31 and insulating film 32 are also further described below.

According to the configuration of the present exemplary embodiment, motor 100 has such a configuration where circuit board 34 is built in on the opening side of stator 10. Circuit board 34 has a substantially disc shape, and has opening 34b at a central portion of circuit board 34 as an opening through which rotary shaft 21 passes. Electronic component 34a such as a drive circuit is mounted on circuit board 34, and a connection line and the like for applying a power supply voltage or a control signal are also connected to circuit board 34. Connection line 39 for connecting to the outside is drawn out to the outside via wiring holder 18 mounted in the wiring hole.

As shown in FIG. 2, terminal cap 36 integrated with mold resin portion 19 is arranged in an inner space on the opening side of stator 10 to draw out the wire terminals of coils 12 from an inside of mold resin portion 19 of stator 10. Terminal cap 36 is a member made of an insulating resin, and including an array plate portion for arranging electrical connection terminals such as pins. The wire terminals of coils 12 and the like are connected to the electrical connection terminals. According to the present exemplary embodiment, electrical connection with circuit board 34 is made using exposed portions of pins, for example, and circuit board 34 is held by terminal cap 36 in the inner space of stator 10.

Motor 100 described above is constituted based on following procedures.

First, stator 10 is constituted by arranging coil assembly 14, second bracket 15, and terminal cap 36 at predetermined positions in a mold, and performing integral molding with resin. Bearings 30A, 30B are mounted on one and the other sides of rotary shaft 21 of rotor 20, respectively. Rotor 20 to which bearings 30A, 30B are mounted is inserted into stator 10 such that output shaft 21p protrudes from opening 35b of first bracket 35.

Subsequently, bearing 30B is press-fitted into holding portion 15a of second bracket 15.

Thereafter, circuit board 34 is mounted on terminal cap 36 on the opening side of stator 10. Connection line 39 connected to circuit board 34 is drawn to the outside via wiring holder 18. Bearing 30A is press-fitted into holding portion 35a of first bracket 35, while first bracket 35 is mounted on the opening side of stator 10 so as to cover the opening.

Finally, metal outer cover 31 and insulating film 32 are mounted on a side closer to second bracket 15 of stator 10. In this manner, motor 100 shown in FIG. 2 is completed.

Coils 12 are energized and driven, using a drive circuit mounted on circuit board 34, by supplying a power supply voltage, a control signal, or the like to motor 100 configured as above via connection line 39. When coils 12 are energized, drive currents flow in coils 12, and a magnetic field is generated from stator core 11. Thereafter, an attractive force and a repulsive force are generated by an alternating magnetic field from stator core 11 and a magnetic field from magnets 24 of rotor 20 in accordance with polarities of these magnetic fields. These forces cause rotor 20 to rotate around rotary shaft 21 in circumferential direction Z.

Described is a detailed configuration of stator 10 on which metal outer cover 31 and insulating film 32 are mounted in motor 100 configured as described above.

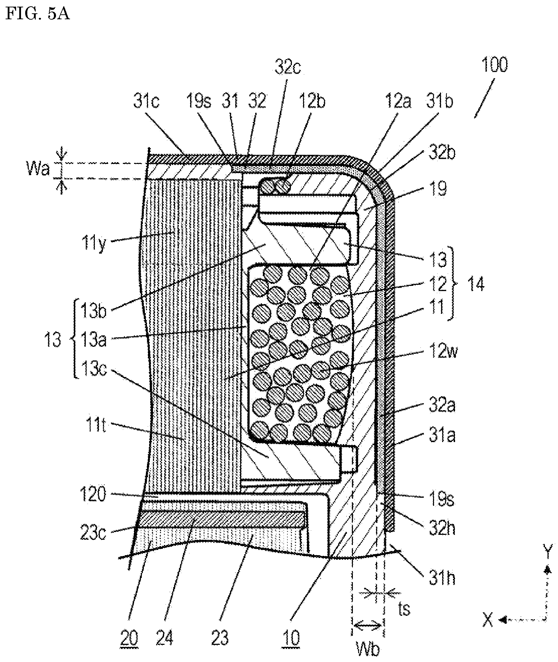

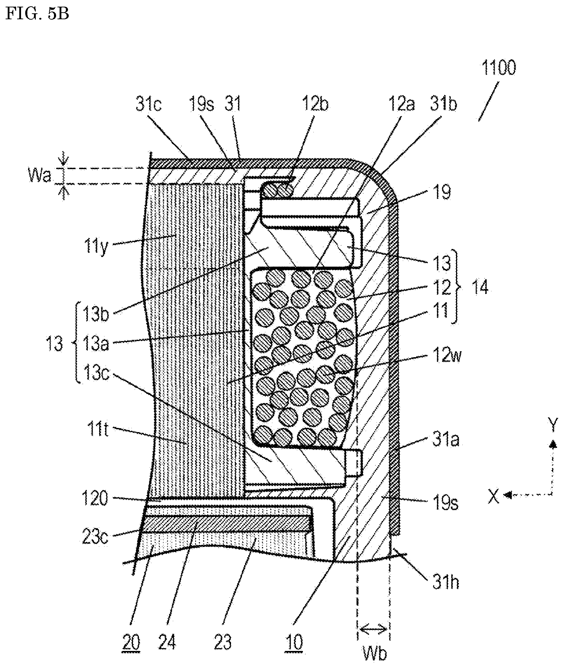

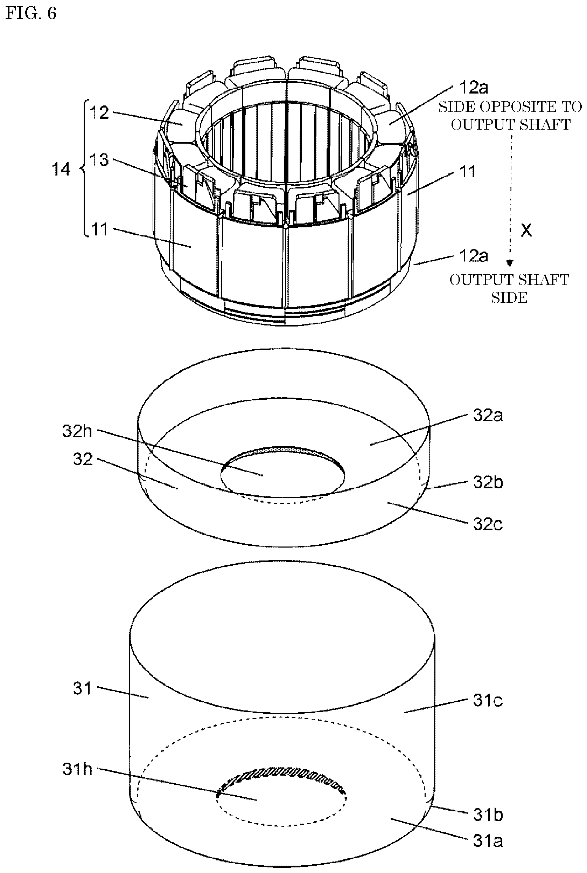

FIG. 5A is a cross-sectional view showing a main part of a positional relationship between coil assembly 14, metal outer cover 31, and insulating film 32 of the motor according to the exemplary embodiment of the present invention. FIG. 5B is a cross-sectional view showing a main part of motor 1100 as a comparative example for comparison with the motor shown in FIG. 5A. FIG. 6 is an exploded perspective view showing coil assembly 14, metal outer cover 31, and insulating film 32 of the motor according to the exemplary embodiment of the present invention. FIG. 6 does not show mold resin portion 19 to present the configuration of coil assembly 14. In reality, however, an outside of coil assembly 14 is covered with mold resin portion 19 as described above.

As shown in FIG. 5A, insulator 13 has bottom surface portion 13a mounted on stator core 11, outer circumferential wall portion 13b forming a wall on an outer circumferential side, and inner circumferential wall portion 13c forming a wall on an inner circumferential side.

According to the configuration of the present exemplary embodiment, one insulator 13 is mounted on each of a pair of end surfaces of one tooth 11t. Specifically, insulators 13 are provided for the corresponding salient pole formed on stator core 11 on both sides of the salient pole in axial direction X. As described above, coil assembly 14 has a configuration including a plurality of insulators 13. Bottom surface portion 13a of each of insulators 13 is constituted by a surface orthogonal to axial direction X. This surface formed in bottom surface portion 13a is mounted in close contact with each end surface of stator core 11 in axial direction X. Each of outer circumferential wall portion 13b and inner circumferential wall portion 13c is constituted by a wall surface extending in axial direction X. Outer circumferential wall portion 13b forms a wall erected on an outer circumferential side of a portion where coil 12 is formed, and regulates a coil position. As shown in FIG. 5A, inner circumferential wall portion 13c is located inside outer circumferential wall portion 13b in radial direction Y, and constitutes a wall erected on an inner circumferential side of the portion where coil 12 is formed, and regulates the coil position.

Bottom surface portion 13a of insulator 13 is mounted on each of both surfaces located at ends of tooth 11t in axial direction X. Winding wire 12w is wound via a pair of mounted insulators 13. By performing this work, one coil 12 is formed for stator core 11. Similar coils 12 are formed for respective teeth 11t, and respective coils 12 are electrically connected with each other according to a predetermined connection pattern to complete coil assembly 14 as shown in FIG 6.

Each of coils 12 of coil assembly 14 shown in FIG. 6 has coil ends 12a protruding toward both sides in axial direction X from stator core 11. A portion of coil 12 other than coil ends 12a is housed in slot 11s of stator core 11 as shown in FIG 3. As shown in FIG. 5A, crossover wires 12b which join coils 12 to each other extend between respective teeth 11t on an outer circumference or the like of outer circumferential wall portion 13b of each of insulators 13 to electrically connect coils 12.

If a safety protection function for preventing excessive currents flowing in coils 12 does not operate normally in a motor equipped with coil assembly 14, excessive currents flow in coils 12. In this case, coils 12 or crossover wires 12b generate heat and become extremely hot. As a result, layer short-circuiting as short-circuiting between winding wires 12w of coils 12 may be caused, or sparks may be generated by layer short-circuiting. Furthermore, there is a possibility that the generated sparks may ignite gas produced from insulators 13 or the like, and cause fire. In particular, coil ends 12a and crossover wires 12b as described above protrude from stator core 11. Accordingly, the possibility of causing these problems is high.

According to the present exemplary embodiment, therefore, metal outer cover 31 which is a metal member as a non-combustion measure is arranged outside coil assembly 14 as shown in FIG. 5A. Specifically, metal outer cover 31 is provided outside mold resin portion 19 which covers the outside of coil assembly 14. As shown in FIGS. 1 and 6, metal outer cover 31 is a metal cylinder having a substantially cup shape. According to the present exemplary embodiment, metal outer cover 31 is arranged so as to close the bottom of stator 10, and surround the outside of the outer circumference of stator 10 with insulating film 32 interposed between metal outer cover 31 and stator 10.

As shown in FIGS. 5A and 6, metal outer cover 31 is mounted on the outer surface of mold resin portion 19 of stator 10. Metal outer cover 31 is mounted outside stator 10 on the side opposite to the output shaft.

Metal outer cover 31 is constituted by bottom surface portion 31a, curved surface portion 31b, and cylindrical portion 31c. Metal outer cover 31 has a hollow cup shape. Bottom surface portion 31a of metal outer cover 31 has a disc shape, and has opening 31h at a center of bottom surface portion 31a. Curved surface portion 31b is curved from bottom surface portion 31a in a curved shape at a substantially right angle. Cylindrical portion 31c extends in a cylindrical shape from curved surface portion 31b toward a tip, and a tip side of cylindrical portion 31c is opened. An inner diameter of cylindrical portion 31c is made substantially equal to an outer diameter of stator 10 such that cylindrical portion 31c can be fitted to an outer circumference of stator 10.

According to the present exemplary embodiment, metal outer cover 31 in axial direction X is sized such that the tip of cylindrical portion 31c has a height sufficient for extending toward the tip in excess of coil end 12a on the output shaft side when metal outer cover 31 is mounted on stator 10 as shown in FIG. 2. In other words, an attachment position of metal outer cover 31 is determined approximately at such a position that cylindrical portion 31c and both coil end 12a on the side opposite to the output shaft side and coil end 12a on the output shaft side completely face each other in radial direction Y via mold resin portion 19 when metal outer cover 31 is mounted on stator 10.

As described above, metal outer cover 31 is arranged with respect to coil assembly 14 such that cylindrical portion 31c surrounds the outside of the outer circumference of stator core 11 shown in FIG. 3 with predetermined clearance Wa left from the outer circumference of stator core 11 in radial direction Y as shown in FIG. 5A. Metal outer cover 31 is mounted on stator 10 based on this positional relationship with respect to coil assembly 14. Therefore, metal outer cover 31 surrounds insulators 13, both coil ends 12a, and crossover wires 12b, and covers these members.

In other words, motor 100 includes metal outer cover 31 which is a metal member. Metal outer cover 31 is mounted on the outer surface of the mold resin so as to surround, at least in circumferential direction Z, both coil ends 12a protruding toward both sides in axial direction X.

Both coil ends 12a, insulators 13 and crossover wires 12b are covered with metal outer cover 31 as a non-combustion measure. Therefore, even if the above-mentioned problem, such as layer short-circuiting, causes fire which tries to spread to the outer circumferential side in radial direction Y from insulators 13 or crossover wires 12b, metal outer cover 31 cuts off the fire or smoke. Therefore, leakage of fire or smoke to the outside of motor 100 is avoidable.

When metal outer cover 31 is mounted outside stator 10 based on the above configuration, metal outer cover 31 is arranged close to coils 12 as shown in FIG. 5A. In addition, as described above, a maximum voltage as a withstanding voltage between the coils and the metal member, that is, a dielectric voltage is specified by the Electrical Appliance and Material Safety Act or the like to secure safety of the motor. As described above, the mold resin formed by molding includes voids and spaces not filled with resin. In this case, the dielectric voltage may decrease.

According to the configuration of the present exemplary embodiment, therefore, insulating film 32 is arranged between coils 12 and metal outer cover 31 in addition to the mold resin of mold resin portion 19 to secure electrical insulation between coils 12 and metal outer cover 31. Specifically, insulating film 32 provided as above is interposed between the outer surface of mold resin portion 19 and the inner surface of metal outer cover 31.

Insulating film 32 is an insulating sheet having a thin film shape. A material of insulating film 32 is not particularly limited. For example, polystyrene resin such as syndiotactic polystyrene (SPS), polyester resin such as polybutylene terephthalate (PBT) and polyethylene terephthalate (PET), or the like can be used.

As shown in FIGS. 5A and 5B, when clearance Wb between coils 12 and bottom surface portion 31a included in metal outer cover 31 is uniform, motor 100 can produce following effects. Specifically, according to motor 100 shown in FIG. 5A, mold resin portion 19 and insulating film 32 are arranged between coil 12 and bottom surface portion 31a. On the other hand, according to motor 1100 in the comparative example shown in FIG. 5B, only mold resin portion 19 is arranged. Insulating film 32 is characterized by having higher electrical insulation than electrical insulation of the mold resin which forms mold resin portion 19.

Accordingly, motor 1100 has a single-layer structure including only mold resin portion 19 between coils 12 and bottom surface portion 31a. Mold resin portion 19 is a portion where voids may be formed. On the other hand, motor 100 has a two-layer structure including mold resin portion 19 and insulating film 32 which achieves high insulation between coils 12 and bottom surface portion 31a. Therefore, comparing motor 100 and motor 1100, motor 100 including insulating film 32 has a higher dielectric breakdown voltage than a dielectric breakdown voltage of motor 1100.

In other words, for securing an equivalent dielectric breakdown voltage, more reduction of clearance Wb, i.e., more thickness reduction is achievable by the structure including mold resin portion 19 and insulating film 32 shown in FIG. 5A than by the structure including only mold resin portion 19 shown in FIG. 5B. As described above, according to the configuration of the present exemplary embodiment, not only mold resin portion 19 but also insulating film 32 is arranged between coils 12 and bottom surface portion 31a included in metal outer cover 31 to increase the dielectric breakdown voltage.

As shown in FIG. 6, insulating film 32 includes bottom surface portion 32a, curved surface portion 32b, and cylindrical portion 32c. Insulating film 32 has a hollow cup shape. Bottom surface portion 32a of insulating film 32 has a disc shape. Insulating film 32 has opening 32h at a center of insulating film 32. Curved surface portion 32b is curved from bottom surface portion 32a in a curved shape at a substantially right angle. Cylindrical portion 32c extends in a cylindrical shape from curved surface portion 32b toward a tip, and the tip side of cylindrical portion 32c is opened.

An inner diameter of cylindrical portion 32c is made substantially equal to the outer diameter of stator 10 such that cylindrical portion 32c can be fitted to the outer circumference of stator 10.

As shown in FIG. 5A, step portion 19s having depth ts is formed in the outer surface of mold resin portion 19 at a portion where insulating film 32 is attached. Depth ts of step portion 19s is substantially equal to a thickness of insulating film 32. A tip of insulating film 32 on the side of cylindrical portion 32c is attached so as to come into contact with an end of step portion 19s located in axial direction X. A tip of insulating film 32 on the side of opening 32h is attached so as to come into contact with an end of step portion 19s located in radial direction Y. Specifically, the outer surface of stator 10 including insulating film 32 becomes a uniform surface by attaching insulating film 32, which has a thickness substantially equal to depth ts of step portion 19s, to step portion 19s in such a manner as to be fitted to step portion 19s on the outer surface of mold resin portion 19. Therefore, metal outer cover 31 is closely attached to mold resin portion 19 with insulating film 32 interposed between metal outer cover 31 and mold resin portion 19.

By providing step portion 19s, insulating film 32 can be easily mounted on mold resin portion 19, and positional displacement of insulating film 32 can be prevented.

According to the present exemplary embodiment, therefore, motor 100 which covers stator 10 with mold resin is capable of securing sufficient electrical insulation, and also preventing leakage of fire to the outside of the motor even if excessive currents flow in coils 12 wound around stator core 11.

As apparent from the above description, motor 100 of the present exemplary embodiment includes metal outer cover 31 as a non-combustion measure. Metal outer cover 31 described above is fitted to the outer circumference of stator 10 in the manner described above. In this case, metal outer cover 31 is arranged so as to cover insulators 13, coil ends 12a, and crossover wires 12b. Therefore, metal outer cover 31 can cut off fire and smoke generated inside motor 100.

Moreover, according to the configuration of the present exemplary embodiment, insulators 13 and coil ends 12a are entirely covered with mold resin portion 19 with only the inner circumferential surface of each tooth 11t exposed. Therefore, sufficient holding strength of coil assembly 14 in stator 10 is secured while achieving the fire protection measure described above.

Furthermore, according to the present exemplary embodiment, insulating film 32 is arranged between mold resin portion 19 and metal outer cover 31. In this case, insulating characteristics improve only by interposing insulating film 32 between coils 12 and metal outer cover 31. Therefore, improvement is easily achievable without a necessity of a structural change or the like. Furthermore, electrical insulation improves by interposing insulating film 32 as a thin film. Therefore, the thickness of mold resin portion 19 can be reduced while securing electrical insulation. As described above, according to the present exemplary embodiment, reduction of the thickness of mold resin portion 19 and therefore miniaturization of the motor are achievable while maintaining sufficient electrical insulation.

As described above, motor 100 which covers stator 10 with mold resin portion 19 is capable of securing electrical insulation, and also preventing leakage of fire to the outside of the motor even if excessive currents flow in coils 12 wound around stator core 11.

As described above, the molded motor of the present exemplary embodiment includes rotor 20, stator 10 facing rotor 20, bearings 30 on which rotor 20 is rotatably supported, mold resin portion 19 covering stator 10 with mold resin, a metal member corresponding to metal outer cover 31 and mounted on the outer surface of mold resin portion 19, and an insulating material corresponding to insulating film 32 and located between mold resin portion 19 and the metal member. Rotor 20 has rotary shaft 21 that extends in axial direction X, and rotor core 23 that holds permanent magnets 24 and is fixed to rotary shaft 21. Stator 10 includes stator core 11 on which a plurality of salient poles corresponding to a plurality of teeth 11t are arranged in a circumferential direction, and a plurality of coils 12 each wound via insulator 13 around corresponding one of the salient poles of stator core 11. The metal member includes cylindrical portion 31c having a cylindrical shape, and bottom surface portion 31a that forms a bottom surface of cylindrical portion 31c. At least a part of a surface of the insulating material is arranged at a portion facing the plurality of coils 12 arranged in the circumferential direction.

Accordingly, the molded motor to be provided is capable of reducing an increase in a size of a motor external shape while securing electrical insulation, and capable of preventing leakage of fire to the outside of the motor even if excessive currents flow in coils wound around a stator core.

In addition, each of the plurality of coils 12 includes coil ends 12a that protrude from stator core 11 toward both sides in axial direction X. Cylindrical portion 31c is located at a portion included in the outer circumferential surface of mold resin portion 19 and facing at least coil ends 12a protruding toward both the sides.

Moreover, the insulating material corresponding to insulating film 32 may have a cup shape having a hole formed in a bottom surface portion of the insulating material, and may be interposed between an inner surface of the metal member corresponding to metal outer cover 31 and the outer surface of mold resin portion 19.

### (Non-claimed example)

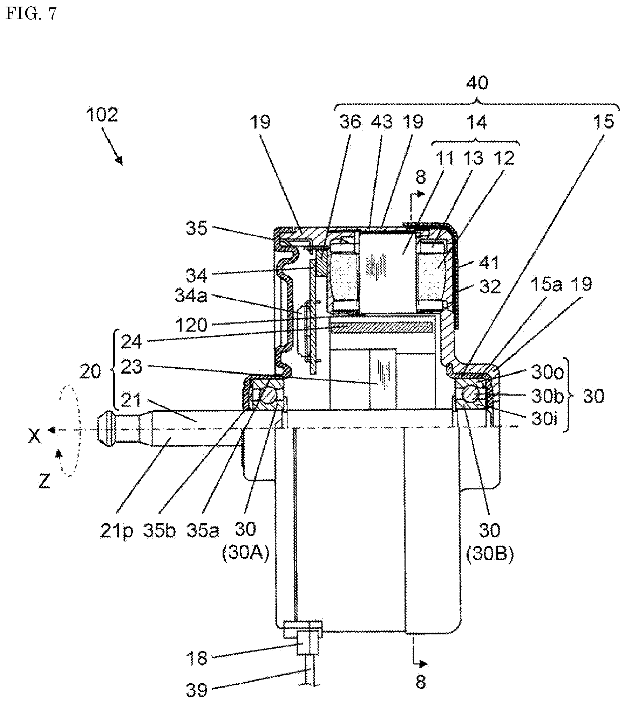

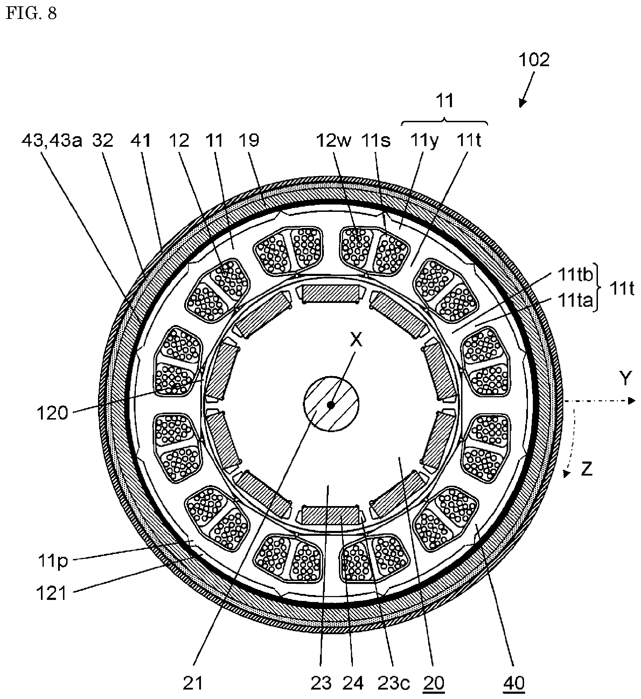

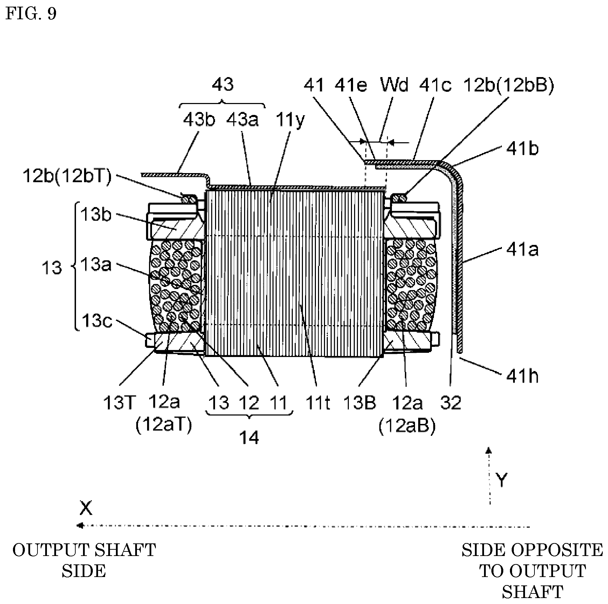

FIG. 7 is a half cross-sectional view of motor 102 according to a non-claimed example. FIG. 8 is a cross-sectional plan view as viewed from arrow 8-8 of FIG. 7. FIG. 9 is a cross-sectional view showing a positional relationship between coil assembly 14, metal inner cover 43, metal outer cover 41, and insulating film 32 of the motor according to the non-claimed example.

As shown in FIGS. 7 to 9, motor 102 of the present non-claimed example is a motor similar to motor 100 of the exemplary embodiment. In comparison with motor 100, motor 102 includes, in addition to metal outer cover 41, metal inner cover 43 as an inner metal member which is located inside mold resin portion 19 as a mold resin. Specifically, as shown in FIG. 7, motor 102 has stator 40 which includes coil assembly 14 on which metal inner cover 43 is mounted, and mold resin portion 19 integrating these members. Metal outer cover 41 has a cup shape similarly to metal outer cover 31 of the exemplary embodiment. Metal outer cover 41 has a shorter length in axial direction X than the length of metal outer cover 31 of the exemplary embodiment. Other configurations and operations are similar to the corresponding configurations and operations of the exemplary embodiment. Components identical to corresponding components of the exemplary embodiment are given identical reference numerals, and the description of the exemplary embodiment is referred to for similar portions.

If a safety protection function for preventing excessive currents flowing in coils 12 does not operate normally in a motor equipped with coil assembly 14 herein, excessive currents flow in coils 12. In this case, coils 12 or crossover wires 12b generate heat and become extremely hot. As a result, layer short-circuiting as short-circuiting between winding wires of coils 12 may be caused, or sparks may be generated by layer short-circuiting. Furthermore, there is a possibility that the generated sparks may ignite gas produced from insulators 13 or the like, and cause fire. In particular, coil ends 12a and crossover wires 12b as described above protrude from stator core 11. Accordingly, the possibility of causing these problems is high.

Therefore, similarly to the exemplary embodiment, metal outer cover 41 which is a metal member as a non-combustion measure is arranged outside coil assembly 14 as shown in FIG. 9. Moreover, metal inner cover 43, which is a metal member as a non-combustion measure, is arranged. Coil assembly 14 including metal inner cover 43 as an inner metal member is provided inside the mold resin.

Specifically, as shown in FIGS. 7 to 9, each of the plurality of coils 12 of motor 102 includes coil ends 12a protruding from stator core 11 toward both sides in axial direction X. Cylindrical portion 41c included in metal outer cover 41 as the metal member is located on the outer circumferential surface of mold resin portion 19 at least at a position facing one of coil ends 12a (12aB).

Motor 102 further includes metal inner cover 43 as a cylindrical inner metal member. Metal inner cover 43 is located inside mold resin portion 19 at a position facing at least the other of coil ends 12a (12aT).

According to motor 102, metal outer cover 41 as the metal member and metal inner cover 43 as the inner metal member each include overlapping portion 41e extending in axial direction X. Metal outer cover 41 and metal inner cover 43 are arranged apart from each other in a direction intersecting axial direction X, that is, in radial direction Y.

Metal inner cover 43 as the inner metal member is provided inside mold resin portion 19 as the mold resin. Metal inner cover 43 has large diameter portion 43b and small diameter portion 43a.

Large diameter portion 43b faces one coil end 12aT of coil ends 12a protruding toward both the end sides in axial direction X in such a manner as to surround one coil end 12aT in circumferential direction Z.

Small diameter portion 43a has an inner diameter smaller than an inner diameter of large diameter portion 43b. Small diameter portion 43a faces stator core 11 in such a manner as to surround the outer circumferential surface of stator core 11 in circumferential direction Z.

Metal outer cover 41 as the metal member is mounted on the outer circumferential surface of mold resin portion 19.

Metal outer cover 41 is mounted on the outer surface of mold resin portion 19 as the mold resin so as to surround, at least in circumferential direction Z, other coil end 12aT of coil ends 12a protruding toward both the sides in axial direction X.

Further details are described with reference to the drawings.

As shown in FIGS. 7 and 8, metal inner cover 43 is a metal cylinder having a substantially cylindrical shape and opened on both sides. According to the present non-claimed example, metal inner cover 43 is arranged so as to surround outside the outer circumference of coil assembly 14 with a predetermined clearance left in radial direction Y from the outer circumference of coil assembly 14.

As shown in FIG. 9, metal inner cover 43 has small diameter portion 43a, and large diameter portion 43b having a diameter larger than a diameter of small diameter portion 43a.

Large diameter portion 43b faces one coil end 12a of the coil ends protruding toward both the end sides in axial direction X in such a manner as to surround one coil end 12a in circumferential direction Z. Small diameter portion 43a faces stator core 11 in such a manner as to surround the outer circumferential surface of stator core 11 in circumferential direction Z.

The inner diameter of small diameter portion 43a is made substantially equal to an outer diameter of stator core 11 such that small diameter portion 43a can be fitted to the outer circumference of stator core 11. Specifically, as shown in FIG. 8, a plurality of protrusions 11p are formed on the outer circumferential surface of stator core 11 at equal intervals in circumferential direction Z. A size of the inner diameter of small diameter portion 43a of metal inner cover 43 is determined such that an inner circumferential surface of small diameter portion 43a contacts each tip of protrusions 11p.

As shown in FIG. 9, a size of small diameter portion 43a in axial direction X is also substantially equal to a size of stator core 11 in axial direction X. In this case, metal inner cover 43 is fitted to coil assembly 14 such that the tips of protrusions 11p formed on stator core 11 and the inner circumferential surface of small diameter portion 43a of metal inner cover 43 are joined to each other. Therefore, metal inner cover 43 is simply and temporarily fixed to coil assembly 14. As shown in FIG. 8, in the temporarily fixed state, space 121 as a narrow space exists between the outer circumferential surface of stator core 11 and the inner circumferential surface of small diameter portion 43a except for a portion where respective protrusions 11p are arranged. Space 121 is also filled with resin during molding.

As shown in FIG. 9, a size of large diameter portion 43b in axial direction X is larger than each size of coil ends 12a in axial direction X. Large diameter portion 43b is provided on metal inner cover 43 only on one side of small diameter portion 43a in axial direction X. By attaching metal inner cover 43 to coil assembly 14, large diameter portion 43b of metal inner cover 43 is arranged so as to surround coil ends 12a and crossover wires 12b on one side in axial direction X.

Note that insulators 13, coil ends 12a, crossover wires 12b, and the like are also separately shown as follows to clarify the arrangement of metal inner cover 43 in FIG. 9. Insulator 13B, coil end 12aB, and crossover wire 12bB are arranged on one side of stator core 11 in axial direction X in FIG. 9. Similarly, insulator 13T, coil end 12aT, and crossover wire 12bT are arranged on the other side opposite to the one side in axial direction X.

Accordingly, as shown in FIG. 9, metal inner cover 43 is arranged such that large diameter portion 43b of metal inner cover 43 surrounds insulator 13T, coil end 12aT, and crossover wire 12bT. On the other hand, insulator 13B, coil end 12aB, and crossover wire 12bB are not surrounded by metal inner cover 43.

In this manner, large diameter portion 43b of metal inner cover 43 as a non-combustion measure is arranged on the outer circumferential side of coil end 12aT, outer circumferential wall portion 13b of insulator 13T, and crossover wire 12bT. Therefore, even if a problem such as layer short-circuiting described above causes fire coming from coils 12 and trying to spread to the outer circumferential side of insulator 13T and crossover wire 12bT in radial direction Y, large diameter portion 43b of metal inner cover 43 cuts off the fire and smoke. Therefore, leakage of fire and smoke to the outside of motor 102 is avoidable.

As shown in FIG. 7, motor 102 has a configuration including metal outer cover 41 as a non-combustion measure similarly to the exemplary embodiment, in addition to the fire prevention measure which arranges metal inner cover 43 in stator 40. Moreover, motor 102 is configured such that insulating film 32 is interposed between the outer surface of mold resin portion 19 and the inner surface of metal outer cover 41 to secure the dielectric voltage.

As shown in FIG. 9, metal outer cover 41 is constituted by bottom surface portion 41a, curved surface portion 41b, and cylindrical portion 41c similarly to the exemplary embodiment. Metal outer cover 41 has a hollow cup shape. Bottom surface portion 41a of metal outer cover 41 has a disc shape, and has opening 41h at a center of bottom surface portion 41a. Curved surface portion 41b is curved from bottom surface portion 41a in a curved shape at a substantially right angle. Cylindrical portion 41c extends in a cylindrical shape from curved surface portion 41b toward a tip, and a tip side of cylindrical portion 41c is opened. An inner diameter of cylindrical portion 41c is made substantially equal to the outer diameter of stator 40 such that cylindrical portion 41c can be fitted to the outer circumference of stator 40.

As shown in FIGS. 7 and 9, metal outer cover 41 is mounted on the outer surface of mold resin portion 19 of stator 40. Metal outer cover 41 is mounted outside stator 40 on the side opposite to the output shaft. Metal outer cover 41 mounted in this manner is arranged at a position on the side opposite to large diameter portion 43b of metal inner cover 43 with respect to stator core 11 in axial direction X. In this case, large diameter portion 43b of metal inner cover 43 is provided for coil end 12aT and the like on the output shaft side, while metal outer cover 41 is arranged for coil end 12aB and the like on the side opposite to output shaft. In this manner, respective non-combustion measures are achieved. Large diameter portion 43b is provided to take the non-combustion measure on the output shaft side. Accordingly, a length of metal outer cover 41 in axial direction X is set to a size sufficient for surrounding coil end 12aB on the side opposite to the output shaft, that is, for producing overlapping portion 41e between cylindrical portion 41c and metal inner cover 43 in axial direction X. In other words, an attachment position of metal outer cover 41 is set to a position sufficient for producing overlapping portion 41e between cylindrical portion 41c and stator core 11 in axial direction X when metal outer cover 41 is mounted on stator 40. FIG. 9 shows a specific example where overlapping portion 41e has size Wd. In this manner, the length of metal outer cover 41 in axial direction X is longer than the size of coil end 12aB in axial direction X, and is shorter than the length of metal outer cover 31 of the exemplary embodiment.

As described above, motor 102 of the present non-claimed exampleincludes metal inner cover 43 and metal outer cover 41 as non-combustion measures.

When molding is performed in a state where metal inner cover 43 is mounted on the side surface of stator core 11, stator 40 which includes mold resin portion 19 integrating these members is produced. On the output shaft side of stator 40, large diameter portion 43b of metal inner cover 43 is arranged so as to surround insulator 13T, coil end 12aT, and crossover wire 12bT. Therefore, on the output shaft side, large diameter portion 43b of metal inner cover 43 can cut off fire and smoke generated inside motor 102.

Moreover, according to the present non-claimed example, metal outer cover 41 is fitted to the outer circumference of stator 40 in the manner described above. In this case, metal outer cover 41 is arranged so as to cover insulator 13B, coil end 12aB, and crossover wire 12bB on the side opposite to the output shaft. Therefore, on the side opposite to the output shaft, metal outer cover 41 can cut off fire and smoke generated inside motor 102.

Moreover, according to the configuration of the present non-claimed example, a whole of insulators 13 and coil ends 12a as well as a whole of metal inner cover 43 are covered with mold resin portion 19 with only the inner circumferential surface of each tooth 11t exposed. Therefore, sufficient holding strength of coil assembly 14 in stator 40 is secured while taking the fire protection measure described above.

Furthermore, according to the present non-claimed example, insulating film 32 as an insulating material is similarly arranged between mold resin portion 19 and metal outer cover 41. In this case, insulating characteristics easily improve only by interposing insulating film 32 between coils 12 and metal outer cover 41. Furthermore, reduction of the thickness of mold resin portion 19 is achievable along with sufficient electrical insulation by interposing insulating film 32 as a thin film. Accordingly, reduction of the thickness of mold resin portion 19 and miniaturization of the motor are also achievable while maintaining sufficient electrical insulation.

As described above, motor 102 which covers stator 40 with mold resin portion 19 is capable of securing electrical insulation, and also preventing leakage of fire to the outside of the motor even if excessive currents flow in coils 12 wound around stator core 11.

In addition, each of the plurality of coils 12 may include coil ends 12a that protrude from stator core 11 toward both sides in axial direction X. Cylindrical portion 41c may be located at a portion included in the outer circumferential surface of mold resin portion 19 and facing at least one of coil ends 12a protruding toward both the sides.

Moreover, the molded motor of the present non-claimed examplemay further include an inner metal member corresponding to metal inner cover 43 having a cylindrical shape. The inner metal member may be located inside mold resin portion 19 and at a portion facing at least the other of coil ends 12a protruding toward both the sides.

Furthermore, each of the metal member corresponding to metal outer cover 41 and the inner metal member corresponding to metal inner cover 43 may include overlapping portion 41e extending in axial direction X, and may be separated from each other in a direction intersecting axial direction X.

In addition, the inner metal member corresponding metal inner cover 43 may be provided inside mold resin portion 19. The inner metal member may include: large diameter portion 43b that faces one coil end 12aT of coil ends 12a protruding toward both the sides in axial direction X to surround one coil end 12aT in circumferential direction Z; and small diameter portion 43a that has an inner diameter smaller than an inner diameter of large diameter portion 43b, and faces stator core 11 to surround the outer circumferential surface of stator core 11 in circumferential direction Z.

Moreover, a metal member corresponding to metal outer cover 41 may be mounted on the outer circumferential surface of mold resin portion 19, and may be mounted on the outer surface of the mold resin so as to surround, at least in circumferential direction Z, other coil end 12aT of coil ends 12a protruding toward both the sides in axial direction X.

Other non-claimed modifications are hereinafter described. Note that characteristic main parts of the non-claimed modifications are chiefly described below.

### (Non-claimed Modification 1)

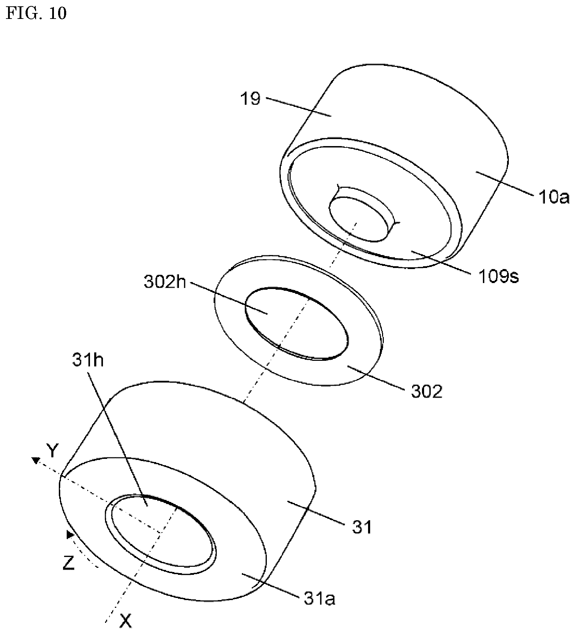

FIG. 10 is an exploded perspective view showing stator 10a, insulating film 302, and metal outer cover 31 of a motor in non-claimed Modification 1 of the present invention. FIG. 10 shows stator 10a covered with mold resin portion 19, insulating film 302 having opening 302h, and metal outer cover 31 in the motor of present non-claimed Modification 1. Other configurations are similar to corresponding configurations of the exemplary embodiment and the non-claimed example.

As shown in FIG. 10, insulating film 302 as an insulating material of the motor of non-claimed Modification 1 has a disc shape having a hole at a center of insulating film 302.

Insulating film 302 is interposed between an inner surface of bottom surface portion 31a included in metal outer cover 31 as a metal member, and an outer surface of mold resin portion 19.

Further details are described with reference to the drawings.

According to the exemplary embodiment and the non-claimed example, for example, insulating film 32 having a cup shape has been described by way of example as shown in FIG. 1. However, as shown in non-claimed Modification 1 in FIG. 10, insulating film 302 having a disc-shape and a hole at the center is adoptable as the insulating material. Accordingly, insulating film 302 is a disc having opening 302h as a hole at a center of a plane.

Moreover, as shown in FIG. 10, step portion 109s is formed in an end surface of stator 10a in axial direction X at a portion where stator 10a and insulating film 302 are in contact with each other. When a depth of step portion 109s and a thickness of insulating film 302 are substantially equal, an outer surface of stator 10a to which insulating film 302 is attached becomes uniform. In this configuration, stator 10a and bottom surface portion 31a included in metal outer cover 31 can come into close contact with each other even when insulating film 302 is interposed.

As described above, an insulating material corresponding to insulating film 302 in the present non-claimed modification may have a disc shape having a hole formed at the center. The insulating material may be interposed between the inner surface of bottom surface portion 31a and the outer surface of mold resin portion 19.

### (Non-claimed Modification 2)

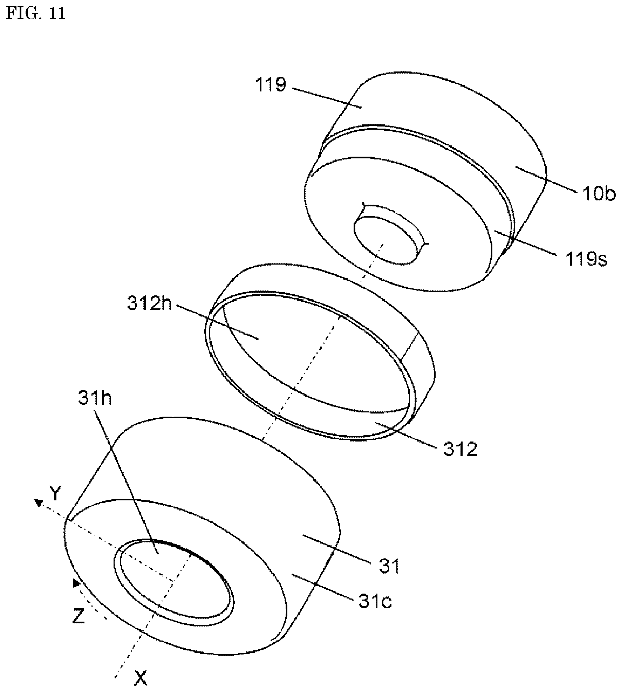

FIG. 11 is an exploded perspective view showing stator 10b, insulating film 312, and metal outer cover 31 of a motor in non-claimed Modification 2 of the present invention. FIG. 11 shows stator 10b covered with mold resin portion 119, insulating film 312 having opening 312h, and metal outer cover 31 in the motor of present non-claimed Modification 2. Other configurations are similar to corresponding configurations of exemplary embodiment and the non-claimed example.

As shown in FIG. 11, insulating film 312 as an insulating material of the motor of non-claimed Modification 2 has a belt shape.

Insulating film 312 is interposed between an inner surface of cylindrical portion 31c included in metal outer cover 31 as a metal member, and an outer surface of mold resin portion 19.

Further details are described with reference to the drawings.

According to the exemplary embodiment and the non-claimed example, for example, insulating film 32 having a cup shape has been described by way of example as shown in FIG. 1. However, as shown in non-claimed Modification 2 in FIG. 11, insulating film 312 having a belt shape is adoptable as the insulating material. Specifically, the insulating material may be produced by forming belt-shaped insulating film 312 into a ring shape.

Moreover, as shown in FIG. 11, step portion 119s is formed in a side surface of stator 10b in radial direction Y at a portion where stator 10b and insulating film 312 are in contact with each other. When a depth of step portion 119s and a thickness of insulating film 312 are substantially equal, an outer surface of stator 10b to which insulating film 312 is attached becomes uniform. In this configuration, stator 10b and cylindrical portion 31c included in metal outer cover 31 come into close contact with each other even when insulating film 312 is interposed.

As apparent from the description of non-claimed Modifications 1 and 2, the shapes of insulating films 302, 312 are not particularly limited. In short, it is sufficient if insulating films 302, 312 are arranged between coils 12 and metal outer cover 31 inside stator 10a, 10b at such positions the requiring sufficient dielectric voltage in a state where coils 12 are close to metal outer cover 31.

As described above, an insulating material corresponding to insulating film 312 in the present non-claimed modification may have a belt shape. The insulating material may be interposed between the inner surface of cylindrical portion 31c and the outer surface of mold resin portion 19.

### (Non-claimed Modification 3)

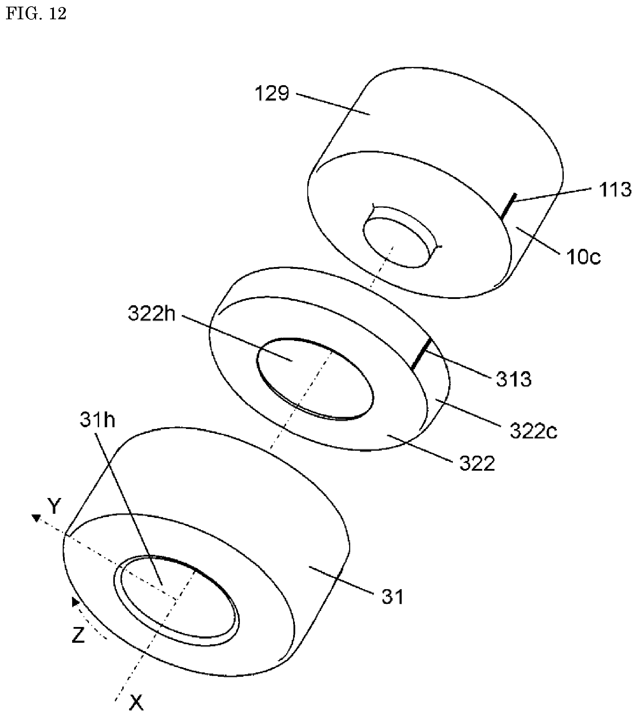

FIG. 12 is an exploded perspective view showing stator 10c, insulating film 322, and metal outer cover 31 of a motor in non-claimed Modification 3 of the present invention. FIG. 12 shows stator 10c covered with mold resin portion 129, insulating film 322 having opening 322h, and metal outer cover 31 in the motor of present non-claimed Modification 3.

As shown in FIG. 12, insulating film 322 as an insulating material of the motor of non-claimed Modification 3 has cut 313. Mold resin portion 129 has protrusion 113 protruding in alignment with cut 313.

Further details are described with reference to the drawings.

In non-claimed Modification 3, one cut 313, which is a film cut, is provided in cylindrical portion 322c included in insulating film 322 having a cup shape. Mold resin portion 129 includes protrusion 113 having a linear shape. Cut 313 is fitted to protrusion 113. Other configurations are similar to corresponding configurations of the exemplary embodiment or the non-claimed example.

As shown in FIG. 12, these changes may be made to insulating film 32 or mold resin portion 19 of stator 10 shown in FIG. 1, for example. According to the motor of non-claimed Modification 3 obtained in this manner, insulating film 322 can be easily mounted, and displacement of insulating film 322 can be prevented by the changes of addition of cut 313 and protrusion 113. Therefore, the motor obtained by the configuration of non-claimed Modification 3 is capable of preventing leakage of fire to the outside of the motor, securing electrical insulation, and improving workability.

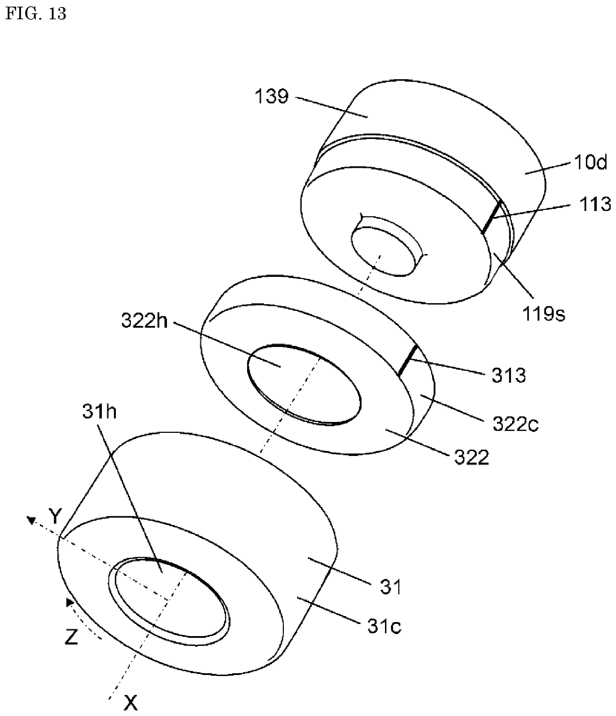

Furthermore, step portion 119s may be provided for stator 10c shown in FIG. 12 similarly to non-claimed Modification 2. FIG. 13 shows a specific example.

FIG. 13 is an exploded perspective view showing stator 10d, insulating film 322, and metal outer cover 31 of a different motor in non-claimed Modification 3 of the present invention. As shown in FIG. 13, mold resin portion 139 of the different motor of non-claimed Modification 3 has step portion 119s. Step portion 119s houses insulating film 322 as an insulating material at a portion where mold resin portion 139 and metal outer cover 31 as a metal member face each other.

Further details are described with reference to the drawings.

FIG. 13 shows stator 10d covered with mold resin portion 139, insulating film 322 having opening 322h, and metal outer cover 31 in the different motor of non-claimed Modification 3. According to stator 10d of the different motor, protrusion 113 is provided on step portion 119s in mold resin portion 139.

The different motor shown in FIG. 13 offers following effects in addition to the effects of non-claimed Modification 3 shown in FIG. 12. Step portion 119s is formed in a side surface of stator 10d in radial direction Y at a portion where stator 10d and insulating film 322 are in contact with each other. When a depth of step portion 119s and a thickness of insulating film 322 are substantially equal, an outer surface of stator 10d to which insulating film 322 is attached becomes uniform. In this configuration, stator 10d and cylindrical portion 31c included in metal outer cover 31 come into close contact with each other even when insulating film 322 is interposed.

A plurality of cuts 313 and a plurality of protrusions 113 may be provided.

As described above, in the present non-claimed modification, an insulating material corresponding to insulating film 322 may have cut 313, and mold resin portion 129 may have protrusion 113 protruding in alignment with cut 313.

Moreover, mold resin portion 139 may have a step portion for housing an insulating material corresponding to insulating film 322 at a portion where mold resin portion 139 and a metal member corresponding to metal outer cover 31 face each other.

### (Non-claimed Modification 4)

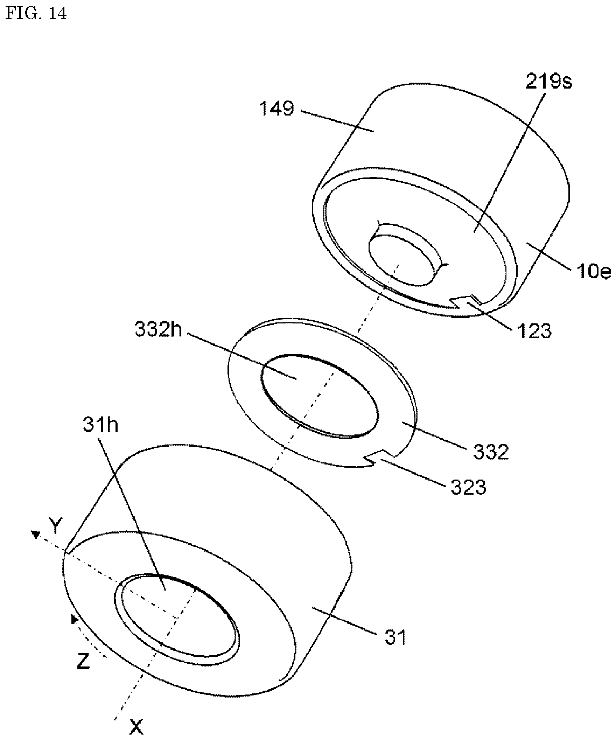

FIG. 14 is an exploded perspective view showing stator 10e, insulating film 332, and metal outer cover 31 of a motor in non-claimed Modification 4 of the present invention. FIG. 14 shows stator 10e covered with mold resin portion 149, insulating film 332 having opening 332h, and metal outer cover 31 in the motor of non-claimed Modification 4. According to non-claimed Modification 4, one cut 323 is formed by cutting a rectangular portion from an outer circumference of insulating film 332 which has a disc shape having a hole at a center of insulating film 332. Protrusion 123 having a rectangular shape and corresponding to cut 323 is formed on mold resin portion 149 at step portion 219s provided in an end surface in axial direction X. Other configurations are similar to corresponding configurations of the exemplary embodiment or the non-claimed example, or non-claimed Modification 1.

As shown in FIG. 14, these changes may be given to insulating film 302 having a disc shape and described in non-claimed Modification 1, or mold resin portion 19 of stator 10 shown in FIG. 1. According to the motor of non-claimed Modification 4 obtained in this manner, insulating film 332 can be easily mounted, and positional displacement of insulating film 332 can be prevented by adding cut 323 and protrusion 123. Therefore, the motor obtained by the configuration of non-claimed Modification 4 is capable of preventing leakage of fire to the outside of the motor, securing electrical insulation, and improving workability.

The shapes of cut 323 and protrusion 123, which are characteristics of non-claimed Modification 4, are not limited to the rectangular shapes described above. For example, each of cut 323 and protrusion 123 having other shapes such as a triangle, a trapezoid, a semicircle, and a cross can offer similar effects.

Moreover, a plurality of cuts 323 and a plurality of protrusions 123 may be provided.

### (Non-claimed Modification 5)

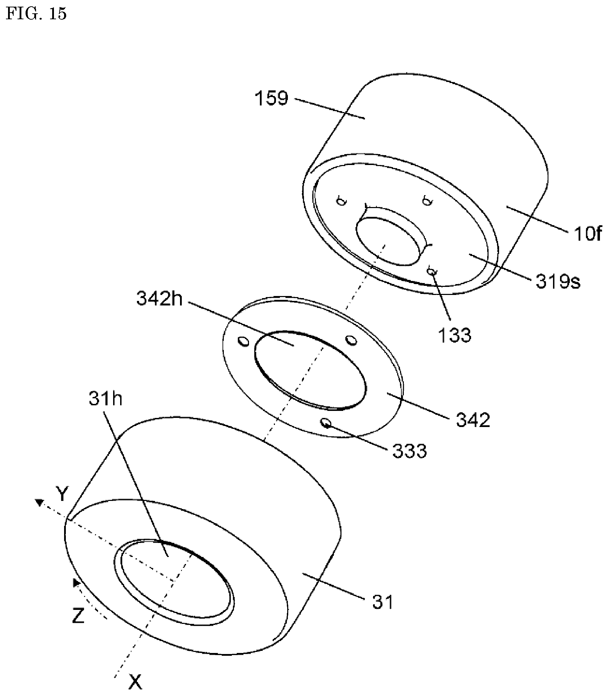

FIG. 15 is an exploded perspective view showing stator 10f, insulating film 342, and metal outer cover 31 of a motor in non-claimed Modification 5 of the present invention. FIG. 15 shows stator 10f covered with mold resin portion 159, insulating film 342 having opening 342h, and metal outer cover 31 in the motor of non-claimed Modification 5. According to non-claimed Modification 5, insulating film 342 having a disc shape includes three holes 333 penetrating a front and a back of insulating film 342. Three protrusions 133 corresponding to holes 333 are formed on mold resin portion 159 at step portion 319s provided in an end surface in axial direction X. Other configurations are similar to corresponding configurations of the exemplary embodiment or the non-claimed example, or non-claimed Modification 1.

As shown in FIG. 15, for example, these changes may be given to insulating film 302 having a disc shape and described in non-claimed Modification 1, and mold resin portion 19 of stator 10 shown in FIG. 1. According to the motor of non-claimed Modification 5 obtained in this manner, insulating film 342 can be easily mounted, and positional displacement of insulating film 342 can be prevented by the changes of addition of holes 333 and protrusions 133. Therefore, the motor obtained by the configuration of non-claimed Modification 5 is capable of preventing leakage of fire to the outside of the motor, securing electrical insulation, and improving workability.

The shapes of holes 333 and protrusions 133, which are characteristics of non-claimed Modification 5, are not particularly limited. For example, holes 333 and protrusions 133 each having a cylindrical shape, a polygonal pillar shape typified by a triangular pillar and a quadrangular pillar, or a cylindrical shape or a pyramid shape having a different cross-sectional shape such as a semicircular shape and a cross shape can offer similar operations and effects.

Moreover, each of numbers of holes 333 and protrusions 133 to be provided may be a different number.

### (Non-claimed Modification 6)

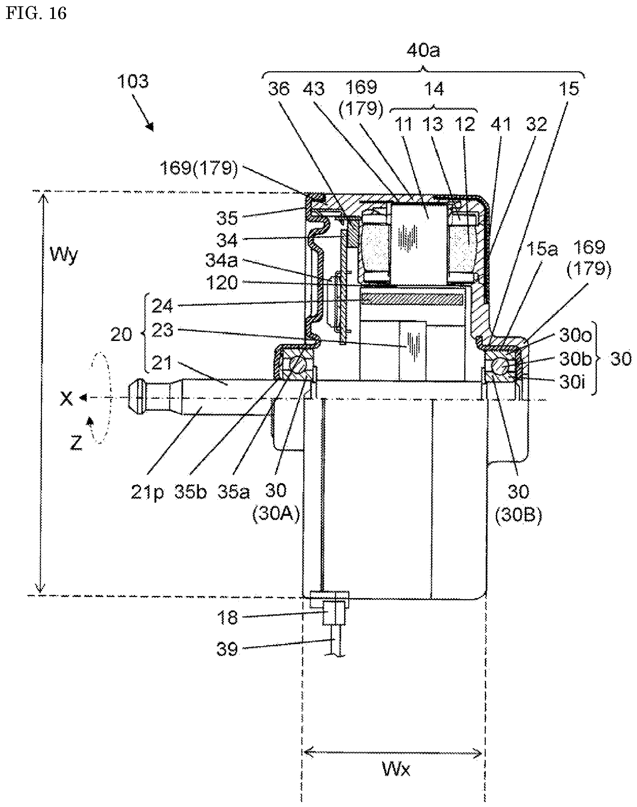

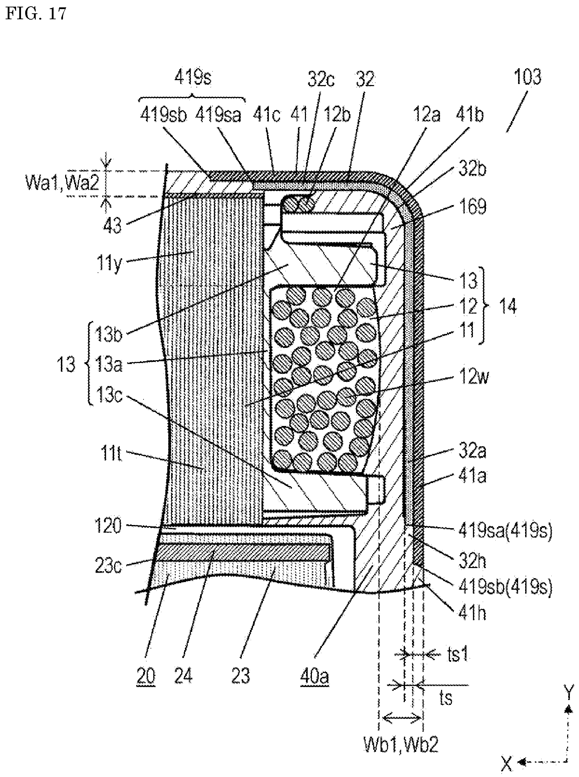

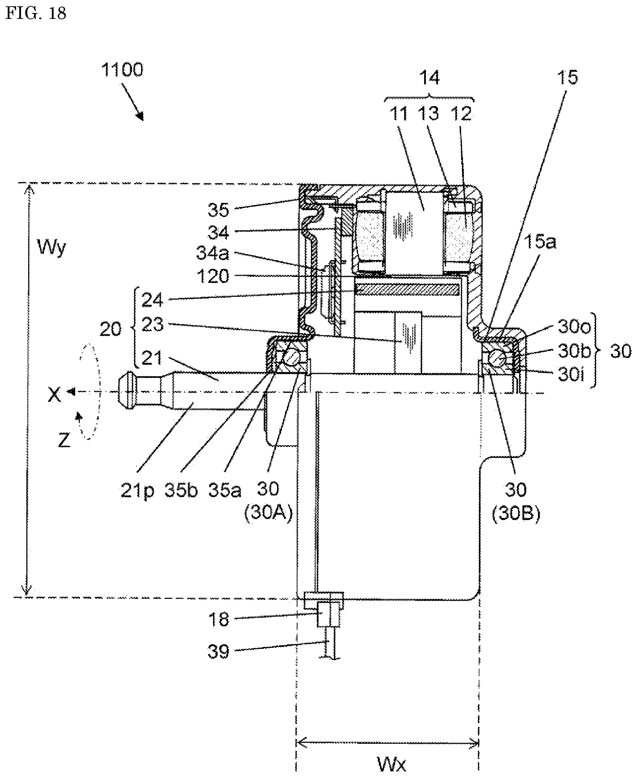

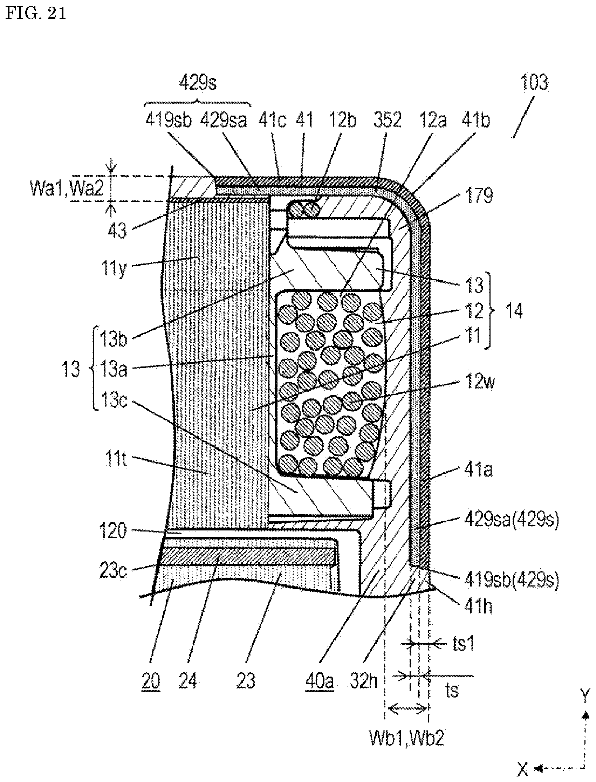

FIG. 16 is a half cross-sectional view of motor 103 according to non-claimed Modification 6 of the present invention. FIG. 16 shows an overall outline of motor 103 of non-claimed Modification 6. Details are described with reference to FIGS. 17 and 21 each showing an enlarged main part. FIG. 18 is a half cross-sectional view showing motor 1100 as a comparative example for comparison with motor 103 shown in FIG. 16.

FIG. 17 is a cross-sectional view showing a main part of a positional relationship between coil assembly 14, metal outer cover 41, and insulating film 32 of motor 103 according to non-claimed Modification 6 of the present invention. FIG. 21 is a cross-sectional view showing a main part of a different positional relationship between coil assembly 14, metal outer cover 41, and insulating film 352 of motor 103 according to non-claimed Modification 6 of the present invention.

As shown in FIGS. 16 and 17, mold resin portion 169 of motor 103 of non-claimed Modification 6 has step portion 419s. Step portion 419s houses insulating film 32 as an insulating material and metal outer cover 41 at a portion where mold resin portion 169 and metal outer cover 41 as a metal member face each other.

The outer surface of metal outer cover 41 as a metal member, and an outer surface of mold resin portion 169 are located on an identical plane.

Further details are described with reference to the drawings.

FIG. 17 shows stator 40a covered with mold resin portion 169, insulating film 32 having opening 32h, and metal outer cover 41 in motor 103 of non-claimed Modification 6.

In non-claimed Modification 6, step portion 419s formed on mold resin portion 169 is constituted by a plurality of steps. Specifically, step portion 419s is constituted by first step portion 419sa and second step portion 419sb sequentially located in axial direction X or radial direction Y from a center of stator 40a. A depth of first step portion 419sa is substantially equal to thickness ts of insulating film 32. A depth of second step portion 419sb is substantially equal to thickness ts1 of metal outer cover 41.

In other words, mold resin portion 169 includes step portion 419s having a depth equivalent to a sum of thicknesses of metal outer cover 41 and insulating film 32.

According to motor 103 of non-claimed Modification 6, a length of cylindrical portion 41c included in metal outer cover 41 is larger than a length of cylindrical portion 32c included in insulating film 32 in axial direction X. In this case, mold resin portion 169 and metal outer cover 41 of motor 103 are in direct contact with each other. Therefore, metal outer cover 41 is firmly fixed to mold resin portion 169 by press-fitting metal outer cover 41 into mold resin portion 169.

Other configurations are similar to corresponding configurations of the exemplary embodiment or the non-claimed example.

In this configuration, the outer surface of metal outer cover 41 as the metal member and an outer surface of mold resin portion 169 are located on an identical plane in axial direction X or radial direction Y in motor 103.

Specifically, mold resin portion 169 of motor 103 has step portion 419s at a portion where mold resin portion 169 faces insulating film 32 and metal outer cover 41. Step portion 419s has a depth corresponding to a sum of insulating film 32 and metal outer cover 41 (ts + ts1).

Therefore, according to stator 40a included in motor 103, size Wa1 of a portion of only mold resin portion 169 in radial direction Y is equal to size Wa2 of a portion of mold resin portion 169 where insulating film 32 and metal outer cover 41 are attached in radial direction Y. Alternatively, according to stator 40a included in motor 103, size Wb1 of a portion of only mold resin portion 169 in axial direction X is equal to size Wb2 of a portion of mold resin portion 169 where insulating film 32 and metal outer cover 41 are attached in axial direction X.

Moreover, motor 103 including insulating film 32 is capable of securing the dielectric voltage corresponding to use applications. Motor 103 including metal outer cover 41 is capable of preventing leakage of fire to the outside of the motor even if sparks or the like are generated in motor 103 for some reasons.

As a comparative example of non-claimed Modification 6, motor 1100 conventionally incorporated in an electric device or the like is shown in FIG. 18 herein.

As shown in FIG. 18, motor 1100 has body length Wx in axial direction X, and length Wy in radial direction Y.

On the other hand, as shown in FIG. 16, motor 103 to which the modification described in present non-claimed Modification 6 is added improves electrical insulation by interposing insulating film 32 as a thin film. Therefore, motor 103 can reduce the thickness of mold resin portion 19 while securing electrical insulation. In other words, motor 103 of present non-claimed Modification 6 is capable of achieving reduction of the thickness of mold resin portion 19 and miniaturization of the motor while maintaining sufficient electrical insulation. Therefore, it is possible to produce motor 103 having body length Wx in axial direction X, and length Wy in radial direction Y

In other words, it is possible to produce motor 103 of present non-claimed Modification 6 having an external size equivalent to the size of the motor conventionally incorporated in electric devices and the like.

Accordingly, motor 103 is capable of achieving improvement of fire preventive performance of the electric device where conventional motor 1100 is incorporated in addition to the operations and effects of the exemplary embodiment or the non-claimed example and the like without adding a change to the electric device.

### (Example)

A case where a PET film is used as insulating film 32 is described with reference to the drawings.

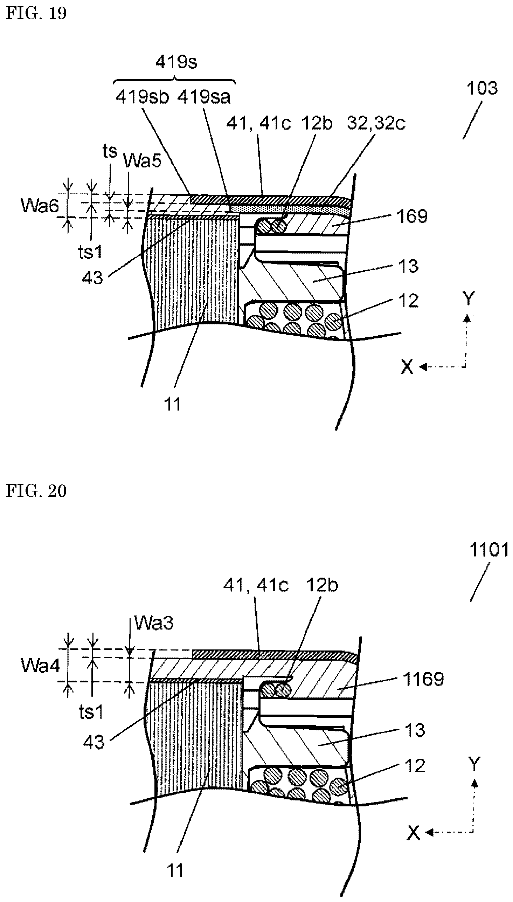

FIG. 19 is an enlarged view of a main part of motor 103 shown in FIG. 17. FIG. 20 is an enlarged view of a main part of motor 1101 as a comparative example for comparison with motor 103 shown in FIG. 19.

The comparative example shown in FIG. 20 is described. As shown in FIG. 20, motor 1101 includes metal outer cover 41 provided by the inventors of the present application as a so-called non-combustion measure for a conventional motor covered with mold resin.

Specifically, thickness Wa3 of mold resin portion 1169, which is a distance between crossover wires 12b and an outer surface of the motor, is 2.5 mm. The thickness of mold resin portion 1169 is an important index for securing an insulation distance from crossover wires 12b. Specifically, mold resin portion 1169 is required to have a predetermined thickness to secure a predetermined insulation distance in a creepage distance from crossover wires 12b to metal outer cover 41. Metal outer cover 41 having a thickness ts1 = 0.5 mm is attached to the outer surface of motor 1101. Therefore, size Wa4 from crossover wires 12b to the outer surface of metal outer cover 41 in motor 1101 is 3.0 mm.

In other words, the external size of the motor including the non-combustion measure initially performed for the conventional motor by the inventors of the present application increases by a thickness of metal outer cover 41 in radial direction Y, i.e., 1.0 mm (0.5 mm × 2 directions).

On the other hand, as shown in FIG. 19, motor 103 described in non-claimed Modification 6 uses the PET film having thickness ts = 0.25 mm as insulating film 32. For example, Teijin (registered trademark) Tetoron (registered trademark) UF is adoptable as the PET film. Teijin Tetoron UF herein satisfies VTM-0 of the international standard UL94 of flame-retardant grade, and is therefore preferable from a viewpoint of the non-combustion measure, which is the main object of the present invention.

When insulating film 32 is used, motor 103 may be configured as follows. Thickness Wa5 of mold resin portion 169 from crossover wires 12b to insulating film 32 is 1.75 mm. Thickness ts1 of metal outer cover 41 attached to the outer surface of motor 103 is 0.5 mm. Therefore, size Wa6 from crossover wires 12b to the outer surface of metal outer cover 41 in motor 103 is 2.5 mm. Accordingly, an outer diameter of motor 103 is equal to an outer diameter of motor 1101 of the comparative example described above in a state where an outer casing is molded using mold resin portion 1169 except for metal outer cover 41.

Both motors 103 and 1101 thus configured were subjected to a dielectric voltage test under EN60335-1, which is an overseas standard. As a result, it was confirmed that both motors 103 and 1101 satisfied the dielectric voltage test which applies AC 1500V - 1min.

As shown in FIG. 21, the sizes of insulating film 352 and metal outer cover 41 at portions in contact with each other may be equalized in the molding of non-claimed Modification 6. Specifically, step portion 429s is constituted by first step portion 429sa and second step portion 419sb sequentially located in axial direction X or radial direction Y from a center of stator 40a. A depth of first step portion 429sa is substantially equal to thickness ts of insulating film 352. A depth of second step portion 419sb is substantially equal to thickness ts1 of metal outer cover 41. On the other hand, unlike the modification shown in FIG. 17, the length of insulating film 352 is substantially equal to the length of metal outer cover 41.

In this configuration, step portion 429s formed on mold resin portion 179 can be produced in one step. Therefore, workability improves in a step of filling a mold with mold resin for molding stator 40a.

As apparent from the above description, according to the exemplary embodiment of the present invention and the non-claimed example, reduction of an increase in a size of an external shape of a motor is achievable while securing electrical insulation. Moreover, the molded motor to be provided is capable of preventing leakage of fire to the outside of the motor even if excessive currents flow in coils wound around a stator core.

### INDUSTRIAL APPLICABILITY

The present invention is applicable to a wide range of so-called molded motors each covering a stator with mold resin.

The present invention is applicable to a wide range of molded motors, including not only molded motors newly incorporated in electric devices, but also molded motors incorporated in electric devices already used in the market by easy replacement of the molded motors.

### REFERENCE MARKS IN THE DRAWINGS

10, 10a, 10b, 10c, 10d, 10e, 10f, 40, 40a: stator
11: stator core
11s: slot
11t: tooth (teeth, salient pole)
11p: protrusion
11y: yoke
11ta: tooth middle portion
11tb: tooth tip end portion
12: coil
12a, 12aB, 12aT: coil end
12b, 12bB, 12bT: crossover wire
12w: winding wire
13, 13B, 13T: insulator
13a: bottom surface portion
13b: outer circumferential wall portion
13c: inner circumferential wall portion
14: coil assembly
15: second bracket
15a, 35a: holding portion
18: wiring holder
19, 119, 129, 139, 149, 159, 169, 179, 1169: mold resin portion
19s, 109s, 119s, 219s, 319s, 419s, 429s: step portion
20, 50: rotor
21: rotary shaft
21p: output shaft
23: rotor core
23c: magnet insertion hole
24: magnet (permanent magnet)
30, 30A, 30B: bearing
30b: ball
30i: inner ring
30o: outer ring
31, 41: metal outer cover (metal member)
31a, 32a, 41a: bottom surface portion
31b, 32b, 41b: curved surface portion
31c, 32c, 41c, 322c: cylindrical portion
31h, 32h, 41h, 302h, 312h, 322h, 332h, 342h: opening
32, 302, 312, 322, 332, 342, 352: insulating film (insulating material)
34: circuit board
34a: electronic component
34b, 35b: opening
35: first bracket
36: terminal cap
39: connection line
41e: overlapping portion
43: metal inner cover (inner metal member)
43a: small diameter portion
43b: large diameter portion
100, 101, 102, 103, 1100, 1101: motor (molded motor)
113, 123, 133: protrusion
120: gap
121: space
313, 323: cut
333: hole
419sa, 429sa: first step portion
419sb: second step portion

## Claims

1. A molded motor (102) comprising:
a rotor (20) that includes a rotary shaft (21) extending in an axial direction, and a rotor core (23) holding a permanent magnet (24) and fixed to the rotary shaft (21);
a stator (10) that includes a stator core (11) on which a plurality of salient poles (11t) are arranged in a circumferential direction, and a plurality of coils (12) comprising coil ends (12a) that protrude from the stator core (11) toward both sides in the axial direction, each coil (12) wound via an insulator (13) around corresponding one of the salient poles (11t) of the stator core (11), and faces the rotor;
a bearing (30) on which the rotor (20) is rotatably supported;
a mold resin portion (19) that covers the stator (10) with mold resin;
a metal member (31) having a cup shape, the metal member (31) being mounted on an outer surface of the mold resin portion (19), and including a cylindrical portion (31c) having a cylindrical shape and a bottom surface portion (31a) forming a bottom surface of the cylindrical portion; and
an insulating material (32) having a cup shape which has a hole in a bottom surface portion thereof, the insulating material (32) being located between an outer surface of the mold resin portion (19) and an inner surface of the metal member (31), at least a part of a surface of the insulating material (32) being arranged at a portion facing the plurality of coils (12) arranged in the circumferential direction, **characterized in that**:
the insulating material (32) has higher electrical insulation than the mold resin portion (19),
wherein the insulating material (32) is an insulating film, and
wherein the cylindrical portion (31c) is located on an outer circumferential surface of the mold resin portion (19), at least a portion of the cylindrical portion (31c) facing the coil ends (12a) on both sides.

2. The molded motor (102) according to claim 1, wherein the mold resin portion (19) has a step portion (19S) that houses the insulating material (32) at a portion where the mold resin portion (19) and the metal member (31) face each other.

3. The molded motor according to claim 1 or 2, wherein an outer surface of the metal member (31) and the outer surface of the mold resin portion (19) are located on an identical plane.

## Patentansprüche

1. Ein vergossener Motor (102), der Folgendes umfasst:
einen Rotor (20), der eine sich in axialer Richtung erstreckende Drehwelle (21) und einen Rotorkern (23) umfasst, der einen Permanentmagneten (24) hält und an der Drehwelle (21) befestigt ist;
einen Stator (10), der einen Statorkern (11), auf dem mehrere vorstehende Pole (11t) in Umfangsrichtung angeordnet sind, und der mehrere Spulen (12) umfasst, die Spulenenden (12a) aufweisen, die vom Statorkern (11) in axialer Richtung zu beiden Seiten vorstehen, wobei jede Spule (12) über einen Isolator (13) um einen entsprechenden der hervorstehenden Pole (11t) des Statorkerns (11) gewickelt ist und dem Rotor zugewandt ist;
ein Lager (30), auf dem der Rotor (20) drehbar gelagert ist;
einen Formharzabschnitt (19), der den Stator (10) mit Formharz bedeckt;
ein Metallteil (31) mit einer Becherform, wobei das Metallteil (31) an einer Außenfläche des Formharzabschnitts (19) angebracht ist und einen zylindrischen Abschnitt (31c) mit einer zylindrischen Form und einen Bodenflächenabschnitt (31a) aufweist, der eine Bodenfläche des zylindrischen Abschnitts bildet; und
ein Isoliermaterial (32) mit einer Becherform, das ein Loch in einem Bodenflächenabschnitt davon aufweist, wobei das Isoliermaterial (32) zwischen einer Außenfläche des Formharzabschnitts (19) und einer Innenfläche des Metallteilss (31) angeordnet ist, wobei mindestens ein Teil einer Oberfläche des Isoliermaterials (32) an einem Abschnitt angeordnet ist, der den mehreren in Umfangsrichtung angeordneten Spulen (12) zugewandt ist, **dadurch gekennzeichnet, dass**
das Isoliermaterial (32) eine höhere elektrische Isolierung als der Formharzabschnitt (19) aufweist,
wobei das Isoliermaterial (32) eine Isolierfolie ist, und
wobei der zylindrische Abschnitt (31c) an einer Außenumfangsfläche des Formharzabschnitts (19) angeordnet ist, wobei mindestens ein Abschnitt des zylindrischen Abschnitts (31c) den Spulenenden (12a) auf beiden Seiten zugewandt ist.

2. Der vergossene Motor (102) gemäß Anspruch 1, wobei der Formharzabschnitt (19) einen Stufenabschnitt (19S) aufweist, der das Isoliermaterial (32) an einem Abschnitt aufnimmt, an dem der Formharzabschnitt (19) und das Metallteil (31) einander gegenüberliegen.

3. Der vergossene Motor gemäß Anspruch 1 oder 2, wobei eine Außenfläche des Metallteils (31) und die Außenfläche des Formharzabschnitts (19) in einer identischen Ebene liegen.

## Revendications

1. Moteur moulé (102) comprenant :
un rotor (20) qui comprend un arbre rotatif (21) s'étendant dans une direction axiale et un noyau de rotor (23) retenant un aimant permanent (24) et fixé à l'arbre rotatif (21),
un stator (10) qui comprend un noyau de stator (11) sur lequel une pluralité de pôles saillants (11t) sont agencés dans une direction circonférentielle, et une pluralité de bobines (12) comprenant des extrémités de bobine (12a) qui font saillie à partir du noyau de stator (11) vers les deux côtés dans la direction axiale, chaque bobine (12) étant enroulée par l'intermédiaire d'un isolateur (13) autour d'un des pôles saillants (11t) correspondants du noyau de stator (11), et qui est tourné vers le rotor,
un palier (30) sur lequel le rotor (20) est supporté de manière rotative,
une portion en résine de moulage (19) qui recouvre le stator (10) de résine de moulage,
un élément en métal (31) en forme de coupelle, l'élément en métal (31) étant monté sur une surface extérieure de la portion en résine de moulage (19) et comprenant une portion cylindrique (31c) de forme cylindrique et une portion de surface inférieure (31a) formant une surface inférieure de la portion cylindrique, et
un matériau d'isolation (32) en forme de coupelle et présentant un trou dans une portion de surface inférieure, le matériau d'isolation (32) étant situé entre une surface extérieure de la portion en résine de moulage (19) et une surface intérieure de l'élément en métal (31), au moins une partie d'une surface du matériau d'isolation (32) étant agencée sur une portion tournée vers la pluralité de bobines (12) et agencée dans la direction circonférentielle ; **caractérisé en ce que** :
le matériau d'isolation (32) présente une isolation électrique supérieure à celle de la portion en résine de moulage (19),
le matériau d'isolation (32) étant un film isolant, et
la portion cylindrique (31c) étant située sur une surface circonférentielle extérieure de la portion en résine de moulage (19), au moins une portion de la portion cylindrique (31c) étant tournée vers les extrémités de bobine (12a) des deux côtés.

2. Moteur moulé (102) selon la revendication 1, dans lequel la portion en résine de moulage (19) présente une portion à gradin (19S) qui loge le matériau d'isolation (32) au niveau d'une portion où la portion en résine de moulage (19) et l'élément en métal (31) se font face.

3. Moteur moulé selon la revendication 1 ou 2, dans lequel une surface extérieure de l'élément en métal (31) et la surface extérieure de la portion en résine de moulage (19) sont situées sur un même plan.
